# EUROPEAN PATENT APPLICATION

(11) **EP 4 186 616 A1**
(43) Date of publication of application: **31.05.2023**
(21) Application number: 20945907.2
(22) Date of filing: 22.07.2020
(51) Int. Cl.: B22F 3/105, B22F 3/16, B23K 26/342, B29C 64/135, B29C 64/153, B29C 64/336, B29C 64/393

(54) **PROCESSING SYSTEM**

(71) Applicant: NIKON CORPORATION, Minato-ku Tokyo 108-6290 (JP)
(72) Inventor: KURAMI, Toshimitsu, Tokyo 108-6290 (JP); ZHI-WEI LIN, Belmont, California 94002 (US); Yoon Jung Jeong, Belmont, California 94002 (US); Michael Birk Binnard, Belmont, California 94002 (US)
(74) Representative: Hoffmann Eitle
(86) International application number: PCT/JP2020/028425
(87) International publication number: WO 2022/018853

(57) **Abstract**

A processing system includes: an irradiation system that irradiates an object with an energy beam; a material supply member that supplies a build material irradiated with the energy beam; a measurement apparatus that obtains information related to a height of a surface of the object; and a distance change apparatus that changes a distance between the material supply member and the surface based on a measured result by the measurement apparatus.

## Description

### Technical Field

The present invention relates to a technical field of a processing system that processes an obj ect.

### Background Art

A Patent Literature 1 discloses one example of a processing system that processes an object. This type of processing system is required to process the object properly.

### Citation List

### Patent Literature

Patent Literature 1: US2016/0375521A1

### Summary of Invention

A first aspect provides a processing system including: an irradiation system that irradiates an object with an energy beam; a material supply member that supplies a build material irradiated with the energy beam; a measurement apparatus that obtains information related to a height of a surface of the object; and a distance change apparatus that changes a distance between the material supply member and the surface based on a measured result by the measurement apparatus, the distance change apparatus is configured to change the distance between the material supply member and the surface to increase it when the height of the surface is lower than a desired height and to change the distance between the material supply member and the surface to decrease it when the height of the surface is higher than the desired height.

A second aspect provides a processing system including: an irradiation system that irradiates an object with an energy beam; a material supply member that supplies a build material irradiated with the energy beam; a measurement apparatus that obtains information related to a height of a surface of the object; and a distance change apparatus that changes a distance between the material supply member and the surface based on a measured result by the measurement apparatus.

A third aspect provides a processing system including: an irradiation system that irradiates an object with an energy beam; a material supply member that supplies a build material irradiated with the energy beam; a measurement apparatus that obtains information related to a height of a surface of the object; and a direction change apparatus that changes a direction of the material supply member based on a measured result by the measurement apparatus.

A fourth aspect provides a processing system including: an irradiation system that irradiates an object with an energy beam; a material supply member that supplies a build material irradiated with the energy beam; a measurement apparatus that obtains information related to a height of a surface of the object; and a material supply control apparatus that changes a supplied amount of the build object based on a measured result by the measurement apparatus.

A fifth aspect provides a processing system including: an irradiation system that irradiates an object with an energy beam; a material supply member that supplies a build material irradiated with the energy beam; a measurement apparatus that obtains information related to a height of a surface of the object; and a material supply control apparatus that controls the material supply member based on a measured result by the measurement apparatus.

A sixth aspect provides a processing system including: an irradiation system that irradiates an object with an energy beam; a material supply member that supplies a build material irradiated with the energy beam; and a distance change apparatus that changes a distance between the material supply member and a surface of the object to increase it when a height of the surface is lower than a desired height.

A seventh aspect provides a processing system including: an irradiation system that irradiates an object with an energy beam; a material supply member that supplies a build material irradiated with the energy beam; and a concentration area change apparatus that changes a distance between a surface of the object and a concentration area of the build material supplied by the material supply member to decrease it when a height of the surface of the object is lower than a desired height.

An eighth aspect provides a processing system including: an irradiation system that irradiates an object with an energy beam; a material supply member that supplies a build material irradiated with the energy beam; and a control apparatus that performs a control so that a concentration area of the build material when a height of a surface of the object is lower than a desired height is located above a concentration area of the build material when the height of the surface is higher than the desired height.

A ninth aspect provides a processing system including: an irradiation system that irradiates an object with an energy beam; a material supply member that supplies a build material irradiated with the energy beam; a measurement apparatus that obtains information related to a position of a surface of the object; and a control apparatus that changes a converged position of the energy beam by controlling the irradiation system based on a measured result by the measurement apparatus.

A tenth aspect provides a processing system including: an irradiation system that irradiates an object with an energy beam; a material supply member that supplies a build material irradiated with the energy beam; and a measurement apparatus that obtains information related to a height of a surface of the object, a relative position between a terminal optical element of the irradiation system and the material supply member is changeable.

An eleventh aspect provides a processing system including: an irradiation system that irradiates an object with an energy beam; a material supply member that supplies a build material irradiated with the energy beam; and a measurement apparatus that obtains information related to a height of a surface of the object, a relative position between the measurement apparatus and the material supply member is changeable.

A twelfth aspect provides a processing system including: an irradiation system that irradiates an object with an energy beam; a material supply member that supplies a build material irradiated with the energy beam; and a measurement apparatus that obtains information related to a height of a surface of the object, a relative directional relationship between a terminal optical element of the irradiation system and the material supply member is changeable.

A thirteenth aspect provides a processing system including: an irradiation system that irradiates an object with an energy beam; a material supply member that supplies a build material irradiated with the energy beam; and a measurement light irradiation apparatus that emits a measurement light for obtaining information related to a height of a surface of the object, a relative directional relationship between the measurement light irradiation apparatus and the material supply member is changeable.

### Brief Description of Drawings

[FIG. 1] FIG. 1 is a cross-sectional view that illustrates a configuration of a processing system in a first example embodiment.
[FIG. 2] FIG. 2 is a system configuration diagram that illustrates a system configuration of the processing system in the first example embodiment.
[FIG. 3] FIG. 3 is a cross-sectional view that illustrates a supply path of the build materials M supplied from a material nozzle.
[FIG. 4] FIG. 4 is a cross-sectional view that illustrates a plurality of measurement lights with which the measurement target object, which has a plurality of surfaces at different heights, is irradiated.
[FIG. 5] Each of FIG. 5A to FIG. 5C is a planer view that illustrates a spot formed by the plurality of measurement lights on a surface of the measurement target object.
[FIG. 6] Each of FIG. 6A to FIG 6E is a cross-sectional view that illustrates an aspect in which a certain area on a workpiece is irradiated with a processing light and build materials are supplied thereto.
[FIG. 7] Each of FIG. 7A to FIG. 7C is a cross-sectional view that illustrates a process for forming a three-dimensional structural object.
[FIG. 8] FIG. 8 is a cross-sectional view that illustrates the material nozzle disposed so that a distance between the material nozzle and a build surface (a distance between a concentration area and the build surface) is a base distance.
[FIG. 9] FIG. 9 is a cross-sectional view that illustrates the material nozzle disposed so that the distance between the material nozzle and the build surface (the distance between the concentration area and the build surface) is longer than the base distance.
[FIG. 10] FIG. 10 is a cross-sectional view that illustrates the material nozzle disposed so that the distance between the material nozzle and the build surface (the distance between the concentration area and the build surface) is shorter than the base distance.
[FIG. 11] FIG. 11 is a graph that illustrates a relationship between a heigh of a build object (a build amount) and the distance between the material nozzle and the build surface (the distance between the concentration area and the build surface)
[FIG. 12] FIG. 12 illustrates new structural layer formed on a structural layer having concave and convex surface as well as the build amount.
[FIG. 13] Each of FIG. 13A and FIG. 13B is a cross-sectional view that illustrates the measurement light for obtaining information related to a height of the build surface in a period during which the structural layer is formed on the build surface.
[FIG. 14] Each of FIG. 14A and FIG. 14B is a cross-sectional view that illustrates the measurement light for obtaining information related to the height of the structural layer in the period during which the structural layer is formed.
[FIG. 15] FIG. 15 is a planer view that illustrates the measurement light with which a plurality of positions on the build surface MS are irradiated.
[FIG. 16] FIG. 16 is a system configuration diagram that illustrates a system configuration of a processing system in a second example embodiment.
[FIG. 17] FIG. 17 is a planar view that illustrates one example of an image displayed by a display.
[FIG. 18] FIG. 18A is a cross-sectional view that illustrates the material nozzle before it is rotated around a rotational axis along at least one of an X-axis and a Y-axis, and FIG. 18B is a cross-sectional view that illustrates the material nozzle after it has been rotated around the rotational axis along at least one of the X-axis and the Y-axis.
[FIG. 19] FIG. 19 is a system configuration diagram that illustrates a system configuration of a processing system in a fourth example embodiment.
[FIG. 20] FIG. 20 is a graph that illustrates a relationship between the heigh of the build object (the build amount) and a supplied amount of the build materials from the material nozzle.
[FIG. 21] FIG. 21 illustrates new structural layer formed on the structural layer having concave and convex surface as well as the build amount.
[FIG. 22] FIG. 22 is a cross-sectional view that illustrates a configuration of a processing system in a fifth example embodiment.
[FIG. 23] FIG. 23 is a system configuration diagram that illustrates a system configuration of the processing system in the fifth example embodiment.
[FIG. 24] FIG. 24 is a cross-sectional view that illustrates a configuration of a processing system in a sixth example embodiment.
[FIG. 25] FIG. 25 is a graph that illustrates a relationship between the heigh of the build object (the build amount) and the distance between the material nozzle and the build surface.
[FIG. 26] FIG. 26 illustrates new structural layer formed on the structural layer having concave and convex surface as well as the build amount.
[FIG. 27] FIG. 27 is a system configuration diagram that illustrates a system configuration of a processing system in a seventh example embodiment.
[FIG. 28] FIG. 28 is a cross-sectional view that illustrates a defocus amount corresponding to a distance between the build surface and a converged position of the processing light.
[FIG. 29] FIG. 29 is a graph that illustrates a relationship between the heigh of the build object (the build amount) and the defocus amount.
[FIG. 30] FIG. 30 illustrates new structural layer formed on the structural layer having concave and convex surface as well as the build amount.
[FIG. 31] FIG. 31 is a system configuration diagram that illustrates a system configuration of a processing system in a eighth example embodiment.
[FIG. 32] FIG. 32 is a perspective view that illustrates a workpiece corresponding to an object a part of which is lost, damaged or abraded (a pipe in an example illustrated in FIG. 32).
[FIG. 33] FIG. 33 is a perspective view that illustrates an original object W2 that is not lost, damaged or abraded (a pipe in an example illustrated in FIG. 33).
[FIG. 34] FIG. 34 is a perspective view that illustrates a three-dimensional shape of a three-dimensional structural object ST (namely, a three-dimensional shape of the lost, damaged or abraded part) that should be formed by an additive processing, calculated by calculating a difference between a three-dimensional shape of the object illustrated in FIG. 32 and a three-dimensional shape of the original object illustrated in FIG. 33.
[FIG. 35] FIG. 35 is a perspective view that illustrates an object in which the lost, damaged or abraded part is complemented with the three-dimensional structural object newly formed by the additive processing.
[FIG. 36] FIG. 36 is a perspective view that illustrates the workpiece corresponding to an object in which the lost, damaged or abraded part is processed (removed, in an example illustrated in FIG. 36).
[FIG. 37] FIG. 37 is a perspective view that illustrates an object in which a part at which the lost, damaged or abrased part is removed is complemented with the three-dimensional structural object newly formed by the additive processing.
[FIG. 38] FIG. 38 is a perspective view that illustrates an object in which a part at which the lost, damaged or abrased part is removed is complemented with the three-dimensional structural object newly formed by the additive processing and new structure is added..

### Description of Example embodiments

Next, with reference to drawings, a processing system SYS that is one example embodiment of a processing system will be described. The processing system SYS in the present example embodiment is a processing system that is configured to form a three-dimensional structural object ST by performing an additive processing. The processing system SYS is configured to form the three-dimensional structural object ST by performing the additive processing based on the Laser Metal Deposition (LMD). Note that the Laser Metal Deposition may be referred to as a Direct Metal Deposition, a Direct Energy Deposition, a Laser Cladding, a Laser Engineered Net Shaping, a Direct Light Fabrication, a Laser Consolidation, a Shape Deposition Manufacturing, a Wire Feed Laser Deposition, a Gas Through Wire, a Laser Powder Fusion, a Laser Metal Forming, a Selective Laser Powder Re-melting, a Laser Direct Casting, a Laser Powder Deposition, a Laser Additive Manufacturing or a Laser Rapid Forming.

In the below-described description, a positional relationship of various components included in the processing system SYS will be described by using an XYZ rectangular coordinate system that is defined by a X-axis, a Y-axis and a Z-axis that are perpendicular to one another. Note that each of an X-axis direction and a Y-axis direction is assumed to be a horizontal direction (namely, a predetermined direction in a horizontal plane) and a Z-axis direction is assumed to be a vertical direction (namely, a direction that is perpendicular to the horizontal plane, and substantially a vertical direction or a gravity direction) in the below-described description, for convenience of the description. Moreover, rotational directions (in other words, inclination directions) around the X-axis, the Y-axis and the Z-axis are referred to as a θX direction, a θY direction and a θZ direction, respectively. Here, the Z-axis direction may be the gravity direction. Moreover, an XY plane may be a horizontal direction.

### (1) Configuration of Processing System SYSa in First Example embodiment

Firstly, a processing system SYS in a first example embodiment (in the below-described description, it is referred to as a "processing system SYSa") will be described.

### (1-1) Configuration of Processing System SYSa

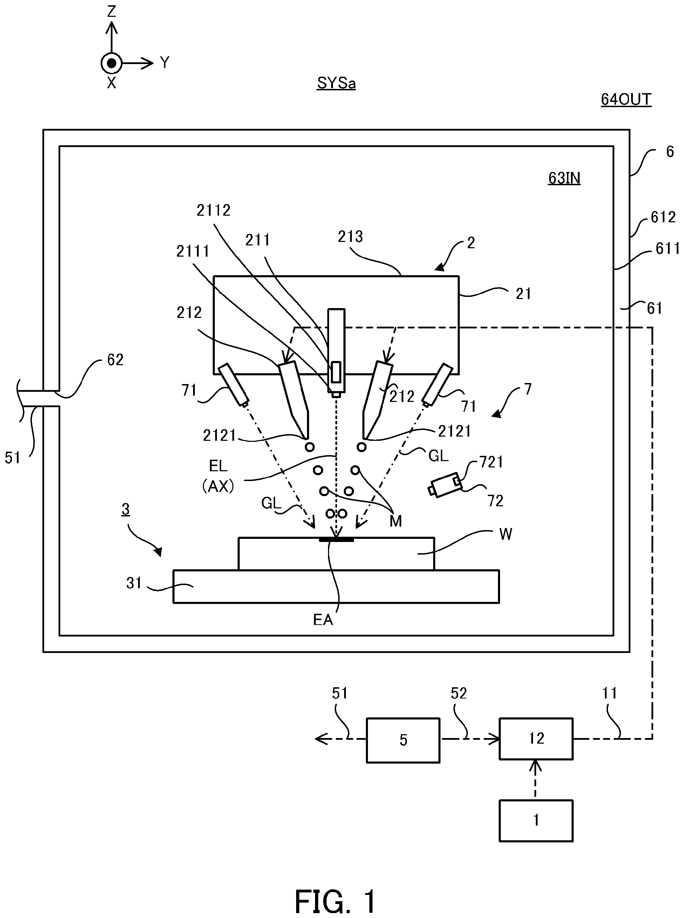

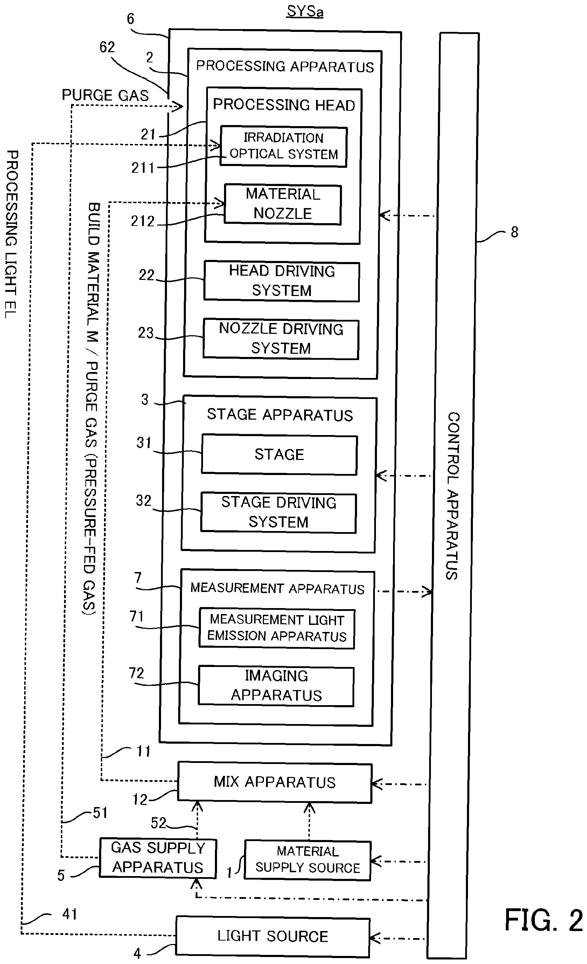

Firstly, with reference to FIG. 1 and FIG. 2, a configuration of the processing system SYSa in the first example embodiment will be described. FIG. 1 is a cross-sectional view that illustrates one example of the configuration of the processing system SYSa in the first example embodiment. FIG. 2 is a system configuration diagram that illustrates one example of a system configuration of the processing system SYSa in the first example embodiment.

The processing system SYSa is configured to perform a build operation for forming the three-dimensional structural object ST (namely, a three-dimensional object having a magnitude (a size) in each of three-dimensional directions, a solid object, in other words, an object having a magnitude (a size) in the X-axis direction, the Y-axis direction and the Z-axis direction). The processing system SYSa is configured to form the three-dimensional structural object ST on a workpiece W that is a base (namely, a base member) for forming the three-dimensional structural object ST. The processing system SYSa is configured to form the three-dimensional structural object ST by performing the additive processing on the workpiece W. When the workpiece W is a below-described stage 31, the processing system SYSa is configured to form the three-dimensional structural object ST on the stage 31. When the workpiece W is an existing object placed on the stage 31 (alternatively, placed on the stage 31), the processing system SYSa may be configured to form the three-dimensional structural object ST on the existing object. In this case, the processing system SYSa may form the three-dimensional structural object ST that is integrated with the existing object. An operation for forming the three-dimensional structural object ST that is integrated with the existing object is equivalent to an operation for adding a new structural object to the existing object. Note that the existing structural object may be an item that needs to be repaired having a missing part, for example. The processing system SYSa may form the three-dimensional structural object ST on the item that needs to be repaired to fill in the missing part of the item that needs to be repaired. Alternatively, the processing system SYSa may form the three-dimensional structural object ST that is separable from the existing object. Note that FIG. 1 illustrates an example in which the workpiece W is the existing object held by the stage 31. Moreover, in the below-described description, the example in which the workpiece W is the existing object held by the stage 31 will be described.

As described above, the processing system SYSa is configured to form the three-dimensional structural object ST by the Laser Metal Deposition. Namely, it can be said that the processing system SYSa is a 3D printer that forms an object by using an Additive layer manufacturing technique. Note that the Additive layer manufacturing technique may be referred to as a Rapid Prototyping, a Rapid Manufacturing or an Additive Manufacturing.

The processing system SYSa forms the three-dimensional structural object ST by processing a build material M with a processing light EL. The build material M is a material that is molten by an irradiation with the processing light EL having a predetermined intensity or more intensity. At least one of a metal material and a resin material is usable as the build material M, for example. However, another material that is different from the metal material and the resin material may be used as the build material M. The build materials M are powder-like or grain-like materials. Namely, the build materials M are powdery materials. However, the build materials M may not be the powdery materials. For example, a wired-like build material or a gas-like build material may be used, as the build material M, for example.

In order to perform the build operation, the processing system SYSa includes a material supply source 1, a processing apparatus 2, a stage apparatus 3, a light source 4, a gas supply apparatus 5, a housing 6, a measurement apparatus 7 and a control apparatus 8, as illustrated in FIG. 1 and FIG. 2. At least a part of each of the processing apparatus 2, the stage apparatus 3 and the measurement apparatus 7 may be contained in a chamber space 63IN in the housing 6.

The material supply source 1 is configured to supply the build materials M to the processing apparatus 2. The material supply source 1 supplies, to the processing apparatus 2, the build materials M the amount of which is necessary for forming the three-dimensional structural object ST per unit time by supplying the build materials M the amount of which is based on the necessary amount.

The processing apparatus 2 forms the three-dimensional structural object ST by processing the build materials M supplied from the material supply source 1. In order to form the three-dimensional structural object ST, the processing apparatus 2 include a processing head 21, a head driving system 22 and a nozzle driving system 23. Furthermore, the processing head 21 includes an irradiation optical system (an irradiation system) 211, a material nozzle 212 (namely, a supply system that supplies the build materials M, and it may be referred to as a material supply member) and a head housing 213. The processing head 21, the head driving system 22 and the nozzle driving system 23 are contained in the chamber space 63IN. However, at least a part of the processing head 21, the head driving system 22 and / or the nozzle driving system 23 may be disposed in an external space 64OUT that is a space outside the housing 6. Note that the external space 64OUT may be a space into which an operator of the processing system SYSa is allowed to enter.

The irradiation optical system 211 is an optical system for emitting the processing light EL. Specifically, the irradiation optical system 211 is optically connected to the light source 4 that generates the processing light EL through a light transmitting member 41 such as an optical fiber and light pipe. The irradiation optical system 211 emits the processing light EL transmitted from the light source 4 through the light transmitting member 41. More specifically, the irradiation optical system 211 emits the processing light EL from a terminal optical element (in other words, a final optical system) 2112 of the irradiation optical system. The terminal optical element 2112 is an optical element (namely, an optical member) of the irradiation optical system 221 that is closest to the workpiece W (in an example illustrated in FIG. 1, that is located at the most -Z side). The irradiation optical system 211 emits the processing light EL in a downward direction (namely, toward a -Z side) from the irradiation optical system 211. Thus, an optical axis AX of the irradiation optical system 211 may be an axis along the Z-axis. The stage 31 is disposed below the irradiation optical system 211. When the workpiece W is placed on the stage 31, the irradiation optical system 211 emits the processing light EL toward the workpiece W that is an object. Specifically, the irradiation optical system 211 is configured to irradiate a target irradiation area EA, which is set on the workpiece W or near the workpiece W as an area that is irradiated with the processing light EL (typically, in which the light is condensed), with the processing light EL. Namely, the irradiation optical system 211 irradiates an position at which the target irradiation area EA is set with the processing light EL. Furthermore, a state of the irradiation optical system 211 is switchable between a state where the target irradiation area EA is irradiated with the processing light EL and a state where the target irradiation area EA is not irradiated with the processing light EL under the control of the control apparatus 8. Note that a direction of the processing light EL emitted from the irradiation optical system 211 is not limited to a direct downward direction (namely, coincident with the -Z-axis direction), and may be a direction that is inclined with respect to the Z-axis by a predetermined angle, for example.

The irradiation optical system 211 is contained in the head housing 213. The irradiation optical system 211 is housed in the head housing 213 so that an emitting port from 2111 from which at least the processing light EL is emitted is exposed from the head housing 213.

The material nozzle 212 is attached to the head housing 213. In the first example embodiment, three material nozzles 212 (however, only two material nozzles 212 are illustrated in FIG. 1) are attached to the head housing 213. The three material nozzles 212 are attached to the head housing 213 to surround the optical axis AX of the irradiation optical system 211. However, two or less or four or more material nozzles 212 may be attached to the head housing 213.

A material supply port 2121 is formed at the material nozzle 212. The material nozzle 212 supplies (for example, injects, jets, blows out or sprays) the build materials M from the material supply port 2121. The material nozzle 212 is physically connected to the material supply source 1, which is a supply source of the build materials M, through a supply pipe 11 and a mix apparatus 12. The material nozzle 212 supplies the build materials M supplied from the material supply source 1 through the supply pipe 11 and the mix apparatus 12. The material nozzle 212 may pressure-feed the build materials M supplied from the material supply source 1 through the supply pipe 11. Namely, the build materials M from the material supply source 1 and a gas for feeding (namely, a pressure-feed gas, and an inert gas such as a Nitrogen or an Argon, for example) may be mixed by the mix apparatus 12 and then pressure-fed to the material nozzle 212 through the supply pipe 11. As a result, the material nozzle 212 supplies the build materials M together with the gas for feeding. The purge gas supplied from the gas supply apparatus 5 is used as the gas for feeding, for example. However, a gas supplied from a gas supply apparatus that is different from the gas supply apparatus 5 may be used as the gas for feeding, for example. Note that the material nozzle 212 is illustrated to have a tube-like shape in FIG. 1, however, a shape of the material nozzle 212 is not limited to this shape.

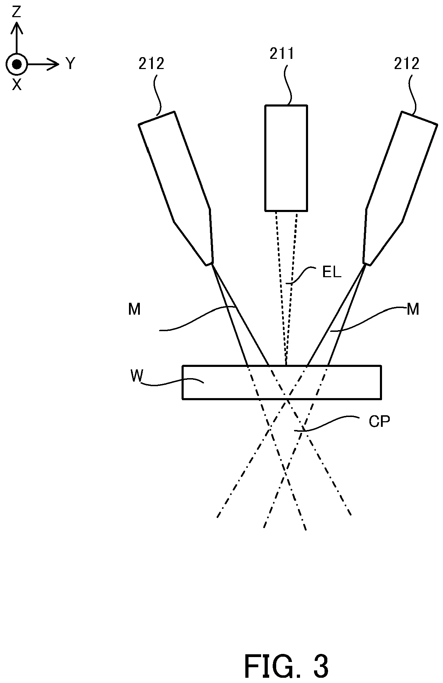

The material supply ports 2121 of the three material nozzles 212 are directed downwardly. The material supply ports 2121 of the three material nozzles 212 are directed toward different directions, respectively. For example, the material supply port 2121 of a first material nozzle 212 may be directed toward a first direction, the material supply port 2121 of a second material nozzle 212 may be directed toward a second direction, and the material supply port 2121 of a third material nozzle 212 may be directed toward a third direction. Positions of the three material nozzles 212 are adjusted relative to one another so that supply paths of the build materials M from the three material supply ports 2121, which are respectively directed toward the different directions, intersect with one another at a concentration area CP, as illustrated in FIG. 3 that is a cross-sectional view illustrating the supply paths of the build materials M from the material nozzle 212. Namely, the positions of the three material nozzles 212 are adjusted relative to one another so that the build materials M supplied from the three material supply ports 2121, which are respectively directed toward the different directions, are supplied to the concentration area CP.

In an example illustrated in FIG. 3, the concentration area CP is located below a surface (especially, an upper surface, the same is applied to this paragraph) of the workpiece W (namely, at a position that is away from the surface of the workpiece W toward the -Z side). Namely, in the present example embodiment, the processing system SYSa processes the workpiece W in a state where the build materials M supplied from the material nozzle 212 reach the surface of the workpiece W (alternatively, a build surface MS described later) before actually reaching the concentration area CP. In the present example embodiment, the processing system SYSa processes the workpiece W in a state where the concentration area CP is located below the surface of the workpiece W (alternatively, the build surface MS described later) (namely, the build surface MS is located between the concentration area CP and the material nozzle 212). However, the concentration area CP may be located on the surface of the workpiece W. Namely, the processing system SYSa may process the workpiece W in a state where the build materials M supplied from the material nozzle 212 reach both of the surface of the workpiece W (alternatively, a build surface MS described later) and the concentration area CP at the same time. In the present example embodiment, the processing system SYSa may process the workpiece W in a state where the concentration area CP is located on the surface of the workpiece W (alternatively, the build surface MS described later). Alternatively, the concentration area CP may be located above the surface of the workpiece W (namely, at a position that is away from the surface of the workpiece W toward the +Z side). Namely, the processing system SYSa may process the workpiece W in a state where the build materials M supplied from the material nozzle 212 reach the build surface MS described later) after actually reaching the concentration area CP. Namely, in the present example embodiment, the processing system SYSa may process the workpiece W in a state where the concentration area CP is located above the build surface MS (namely, the concentration area CP is located between the build surface MS and the material nozzle 212).

The material nozzle 212 supplies the build materials M in a downward direction (namely, toward the -Z side) from the material nozzle 212. The stage 31 is disposed below the material nozzle 212. When the workpiece W is placed on the stage 31, the material nozzle 212 supplies the build materials M toward the workpiece W or a vicinity of the workpiece W. Note that a supply direction of the build materials M supplied from the material nozzle 212 is a direction that is inclined with respect to the Z-axis by a predetermined angle (as one example, an acute angle), however, it may be the -Z-axis direction (namely, a direct downward direction).

Note that the processing system SYSa may supply the same type of build materials M from the material supply ports 2121 of three material nozzles 212. Alternatively, the processing system SYSa may supply the different types of build materials M from the material supply ports 2121 of three material nozzles 212, respectively.

The build materials M supplied from the material nozzle 212 are irradiated with the processing light emitted from the irradiation optical system 211. As a result, the build materials M are molten. The processing system SYSa performs the additive processing on the workpiece W by using the molten build materials M.

The head driving system 22 is configured to move (namely, displace) the processing head 21 (specifically, the head hosing 213). Thus, the head driving system 22 may be referred to as a movement apparatus. The head driving system 22 moves the head housing 213 along at least one of the X-axis, the Y-axis, the Z-axis, the θX direction, the θY direction and the θZ direction, for example. Since the irradiation optical system 211 is contained in the head housing 213 and the material nozzle 212 is attached to the head housing 213, when the head driving system 22 moves the head housing 213, the irradiation optical system 211 and the material nozzle 212 also move. In this case, the head driving system 22 may be regarded to be a driving system that is configured to move the irradiation optical system 211 and the material nozzle 212 simultaneously.

The nozzle driving system 23 is configured to move (namely, displace) the material nozzle 212. On the other hand, the nozzle driving system 23 does not move the irradiation optical system 211. Namely, the nozzle driving system 23 moves the material nozzle 212 relative to the irradiation optical system 211. The nozzle driving system 23 moves the material nozzle 212 separately from the irradiation optical system 211. The nozzle driving system 23 moves the material nozzle 212 independently from the irradiation optical system 211. Thus, the nozzle driving system 23 is different from the head driving system 22 that moves the irradiation optical system 211 and the material nozzle 212 simultaneously in that it is configured to move the material nozzle 212 without moving the irradiation optical system 211. Since the nozzle driving system 23 moves the material nozzle 212, the material nozzle 212 is attached to the head housing 213 so as to be movable.

The nozzle driving system 23 moves the material nozzle 212 along at least one of the X-axis, the Y-axis, the Z-axis, the θX direction, the θY direction and the θZ direction. In the first example embodiment, the nozzle driving system 23 moves the material nozzle 212 along the Z-axis. When the material nozzle 212 moves along the Z-axis, a distance (specifically, a distance along the Z-axis) between the material nozzle 212 and the upper surface of the workpiece W changes. Thus, the nozzle driving system 23 may be regarded to serve as a distance change apparatus that changes the distance between the material nozzle 212 and the upper surface of the workpiece W. Furthermore, when the distance between the material nozzle 212 and the upper surface of the workpiece W changes, a distance (specifically, a distance along the Z-axis) between the upper surface of the workpiece W and the concentration area CP at which the build materials M supplied from the material nozzles 212 are concentrated changes. Thus, the nozzle driving system 23 may be regarded to serve as a concentration area change apparatus that changes the concentration area CP (specifically, changes the position of the concentration area CP, in other words, the distance between the concentration area CP and the upper surface of the workpiece W). Note that the concentration area CP may be referred to as a concentration space. Moreover, when the material nozzle 212 moves along the Z-axis, a relative position (for example, a relative position along the Z-axis) of the material nozzle 212 and the irradiation optical system 211 (especially, the terminal optical element 2112) changes. Thus, the nozzle driving system 23 may be regarded to serve as an apparatus that is configured to change the relative position between the material nozzle 212 and the irradiation optical system 211 (especially, the terminal optical element 2112).

When the processing head 21 includes the plurality of material nozzles 212, the nozzle driving system 23 may move the plurality of material nozzles 212 collectively. Namely, the nozzle driving system 23 may move the plurality of material nozzles 212 in the same moving aspect. Alternatively, the nozzle driving system 23 may move at least one of the plurality of material nozzles 212 and may not move at least another one of the plurality of material nozzles 212. Alternatively, the nozzle driving system 23 may move at least one of the plurality of material nozzles 212 in a first moving aspect and may move at least another one of the plurality of material nozzles 212 in a second moving aspect that is different from the first moving aspect.

The stage apparatus 3 includes the stage 31. The stage 31 is contained in the chamber space 63IN. The workpiece W may be placed on the stage 31. The stage 31 may be configured to hold the workpiece W placed on the stage 31. In this case, the stage 31 may include a mechanical chuck, an electro-static chuck, a vacuum chuck and the like in order to hold the workpiece W. Alternatively, the stage 31 may not be configured to hold the workpiece W placed on the stage 31. In this case, the workpiece W may be placed on the stage 31 without clamp. Since the stage 31 is contained in the chamber space 63IN, the workpiece W supported by the stage 31 is also contained in the chamber space 63IN. Furthermore, the stage 31 may be configured to release the held workpiece W, when the workpiece W is held. The above-described irradiation optical system 211 emits the processing light EL in at least a part of a period during which the workpiece W is placed on the stage 31. Furthermore, the above-described material nozzle 212 supplies the build materials M in at least a part of the period during which the workpiece W is placed on the stage 31

The stage driving system 32 is configured to move (namely, displace) the stage 31. The stage driving system 32 moves the stage 31 along at least one of the X-axis, the Y-axis, the Z-axis, the θX direction, the θY direction and the θZ direction. When the stage driving system 32 moves the stage 31, a relative position between the processing head 21 and the stage 31 changes.

The light source 4 is configured to emit at least one of an infrared light, a visible light and an ultraviolet light as the processing light EL, for example. However, other type of light may be used as the processing light EL. The processing light EL may include a plurality of pulsed lights (namely, a plurality of pulsed beams). The processing light EL may include a Continuous Wave (CW). The processing light EL may be a laser light. In this case, the light source 4 may include semiconductor laser such as a laser light source (for example, a Laser Diode (LD)). The laser light source may include at least one of a fiber laser, a CO₂ laser, a YAG laser, an Excimer laser and the like. However, the processing light EL may not be the laser light. The light source 4 may include any light source (for example, at least one of a LED (Light Emitting Diode), a discharge lamp and the like).

The gas supply apparatus 5 is a supply source of purge gas for purging the chamber space 63IN. The purge gas includes inert gas. At least one of Nitrogen gas and Argon gas is one example of the inert gas. The gas supply apparatus 5 is connected to the chamber space 63IN through a supply port 62 formed at a wall member 61 of the housing 6 and a supply pipe 51 that connects the gas supply apparatus 5 and the supply port 62. The gas supply apparatus 5 supplies the purge gas to the chamber space 63IN through the supply pipe 51 and the supply port 62. As a result, the chamber space 63IN is a space that is purged by the purge gas. The purge gas supplied to the chamber space 63IN may be discharged from a non-illustrated discharge port formed at the wall member 61. Note that the gas supply apparatus 5 may be a tank that stores the inert gas. When the purge gas is the Nitrogen gas, the gas supply apparatus 5 may be a Nitrogen gas generation apparatus that generates the Nitrogen gas by using air as material.

When the material nozzle 212 supplies the build materials M together with the purge gas, the gas supply apparatus 5 may supply the purge gas to the mix apparatus 12 to which the build materials M are supplied from the material supply source 1, in addition to the chamber space 63IN. Specifically, the gas supply apparatus 5 may be connected to the mix apparatus 12 through a supply pipe 52 that connects the gas supply apparatus 5 and the mix apparatus 12. As a result, the gas supply apparatus 5 supplies the purge gas to the mix apparatus 12 through the supply pipe 52. In this case, the build materials M from the material supply source 1 may be supplied (specifically, pressure-fed) to the material nozzle 212 through the supply pipe 11 by the purge gas supplied from the gas supply apparatus 5 through the supply pipe 52. Namely, the gas supply apparatus 5 may be connected to the material nozzle 212 through the supply pipe 52, the mix apparatus 12 and the supply pipe 11. In this case, the material nozzle 212 supplies, from the material supply port 2121, the build materials M together with the purge gas for pressure-feeding the build materials M.

The housing 6 is a housing apparatus that is configured to contain at least a part of each of at least the processing apparatus 2 and the stage apparatus 3 in the chamber space 63IN that is an internal space of the housing 6. The housing 6 includes the wall member 61 that defines the chamber space 63IN. The wall member 61 is a member that separates the chamber space 63IN from the external space 64OUT at the outside of the housing 6. The wall member 61 faces the chamber space 63IN through its inner wall 611 and faces the external space 64OUT through its outer wall 612. In this case, a space surrounded by the wall member 61 (more specifically, a space surrounded by the inner wall 611 of the wall member 61) is the chamber space 63IN. Note that an openable and closable door may be disposed at the wall member 61. The door may be opened when the workpiece W is to be placed on the stage 31. The door may be opened when the workpiece W and / or a build object is unloaded from the stage 31. The door may be closed during each of the build operation and a processing operation is performed. Note that an observation window (not illustrated) for visually observing the chamber space 63IN from the external space 64OUT of the housing 6 may be disposed at the wall member 61.

The measurement apparatus 7 is configured to measure a measurement target object placed on the stage 31. Specifically, the measurement apparatus 7 is configured to measure a position of a surface of the measurement target object. Namely, the measurement apparatus 7 is configured to obtain information related to the position of the surface of the measurement target object. Especially in the first example embodiment, the measurement apparatus 7 is configured to measure a position (what we call a height) of the surface of the measurement target object in the Z-axis direction. The measurement apparatus 7 is configured to obtain information related to the position (what we call the height) of the surface of the measurement target object in the Z-axis direction. The workpiece W is one example of the measurement target object. The three-dimensional structural object ST formed on the workpiece W is one example of the measurement target object. The three-dimensional structural object ST under construction (namely, the build object that is a part of the three-dimensional structural object ST) is one example of the measurement target object.

The measurement apparatus 7 may be attached to the wall member 61 defining the chamber space 63IN. The measurement apparatus 7 may be attached to a structural object, which is different from the wall member 61, in the chamber space 63IN. The measurement apparatus 7 may be attached to the head housing 213. When the measurement apparatus 7 is attached to the head housing 213, it can be said that the measurement apparatus 7 is disposed at a position that is fixed relative to the irradiation optical system 211 (for example, the terminal optical element 2112 thereof). When the measurement apparatus 7 is attached to the head housing 213, the movement of the material nozzle 212 along the Z-axis by the above-described nozzle driving system 23 results in a change of the position of the material nozzle 212 relative to the measurement apparatus 7. Namely, a relative position of the measurement apparatus 7 and the material nozzle 212 may be changeable.

The measurement apparatus 7 may be any type of measurement apparatus as long as it is configured to measure the position of the measurement target object. For example, the measurement apparatus 7 may include a 3D scanner that is configured to measure the measurement target object three-dimensionally. For example, the measurement apparatus 7 may include a stereo camera that is configured to measure the measurement target object three-dimensionally. For example, the measurement apparatus 7 may include a measurement apparatus that is configured to measure the measurement target object by irradiating the measurement target object with a measurement light through the irradiation optical system 211, which is used to irradiate the workpiece W with the processing light EL, and detecting (namely, optically receiving) a returned light (for example, at least one of a reflected light and a scattered light) of the measurement light from the measurement target object through the irradiation optical system 211. For example, the measurement apparatus 7 may include a measurement apparatus that is configured to measure the measurement target object by irradiating the measurement target object with a measurement light and detecting (namely, optically receiving) a returned light (for example, at least one of a reflected light and a scattered light) of the measurement light from the measurement target object. For example, the measurement apparatus 7 may include a measurement apparatus that is configured to measure the measurement target object by detecting (namely, optically receiving) any light (for example, at least one of a reflected light and a scattered light of an environment light) from the measurement target object. For example, when the measurement target object is the workpiece W, the measurement apparatus 7 may include a measurement apparatus that is configured to measure the measurement target object by detecting (namely, optically receiving) any light (for example, at least one of the reflected light of the environment light, the scattered light of the environment light and a light from a below-described melt pool MP) from the workpiece W. In an example illustrated in FIG. 1 and FIG. 2, the measurement apparatus 7 irradiates the surface of the measurement target object with a plurality of measurement lights GL and measures the position of the measurement target object based on a stage of a plurality of spots that are formed on the surface of the measurement target object by the plurality of measurement lights GL, respectively. In this case, the measurement apparatus 7 may include a plurality of measurement light emission apparatuses 71 and an imaging apparatus 72.

The plurality of measurement light emission apparatuses 71 are attached to the head housing 213. Namely, the plurality of measurement light emission apparatuses 71 may be disposed at a position that is fixed relative to the irradiation optical system 211 (especially, the terminal optical element 2112 thereof) contained in the head housing 213. In this case, the movement of the material nozzle 212 along the Z-axis by the above-described nozzle driving system 23 results in a change of the position of the material nozzle 212 relative to each measurement light emission apparatus 71. Namely, a relative position of each measurement light emission apparatus 71 and the material nozzle 212 may be changeable. Each measurement light emission apparatus 71 emits the measurement light GL toward the measurement target object placed on the stage 31. Namely, each measurement light emission apparatus 71 emits the measurement light GL in a downward direction. Positions of the plurality of measurement light emission apparatuses 71 are adjusted so that the plurality of measurement lights GL intersect with each other at a position under the processing head 21. Note that the measurement light emission apparatus 71 may be referred to as an irradiation apparatus or a measurement light irradiation apparatus, because it irradiates the measurement target object with the measurement light GL.

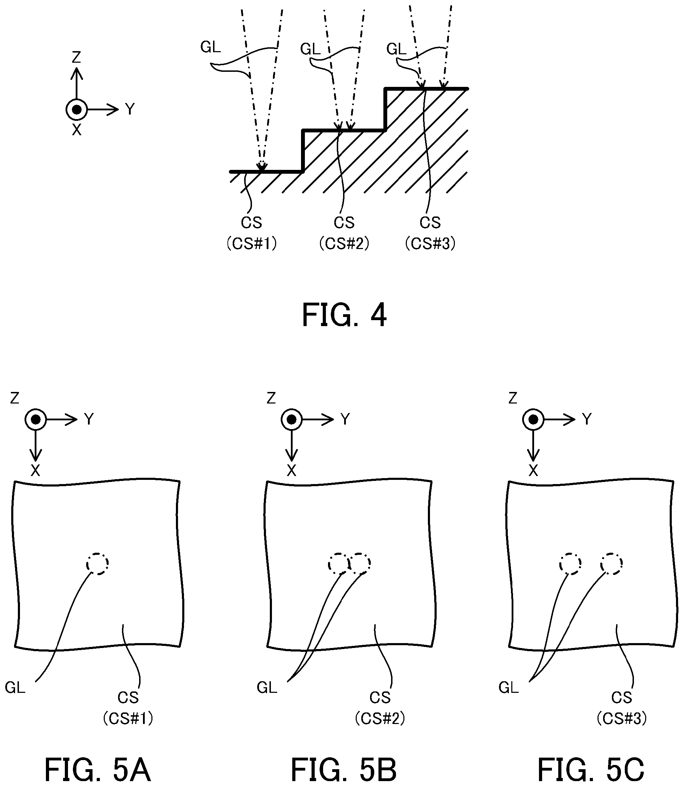

The imaging apparatus 72 captures an image of the plurality of spots, which are formed on the surface of the measurement target object by the plurality of measurement lights GL, respectively, by using an optical reception element 721 (in other words, an imaging element) that is an optical element for optically receiving the light (for example, returned lights of the plurality of measurement lights GL) from the measurement target object. The state of the plurality of spots is changed depending on the position (the height) of the surface of the measurement target object. Specifically, as illustrated in FIG. 4, an example in which the measurement target object, which has a plurality of surfaces CS (three surfaces CS#1, CS#2 and CS#3 in an example illustrated in FIG. 4) at different heights, is irradiated with the plurality of measurement lights GL will be described. In this case, the state of the plurality of spots on the surface CS#1 (see FIG. 5A), the state of the plurality of spots on the surface CS#2 (see FIG. 5B) and the state of the plurality of spots on the surface CS#3 (see FIG. 5C) are different from one another. Specifically, as illustrated in FIG. 5A to FIG. 5C, a positional relationship between the plurality of spots changes. For example, in an example illustrated in FIG. 5A to FIG. 5C, the plurality of measurement lights GL intersect with each other on the surface CS#1. In this case, as illustrated in FIG. 5A, the plurality of spots overlap with each other, and thus, one spot is substantially formed on the surface CS#1. On the other hand, when the plurality of measurement lights GL intersect with each other on the surface CS#1, the plurality of measurement lights GL do not intersect with each other on the surfaces CS#2 and CS#3 that are located at different heights from the surface CS#1. As a result, as illustrated in FIG. 5B and FIG. 5C, the plurality of spots are formed on each of the surfaces CS#2 and CS#3. Furthermore, a distance between the plurality of spots is longer as the height of the surface CS relative to the surface CS#1 is higher. In the example illustrated in FIG. 5A to FIG. 5B, the distance between the plurality of spots formed on the surface CS#3 is longer than the distance between the plurality of spots formed on the surface CS#2 lower than the surface CS#3. Thus, an image that is captured by the imaging apparatus 72 and that indicates the state of the plurality of spots includes information related to the position (the height) of the surface of the measurement target object. Therefore, the control apparatus 8 is capable of calculating the height of the surface of the measurement target object based on the image captured by the imaging apparatus 72. For example, the control apparatus 8 may calculate the height of the measurement target object based on the image captured by the imaging apparatus 72. In this case, the image that is captured by the imaging apparatus 72 and that indicates the state of the plurality of spots may be regarded to include information related to the position (the height) of the measurement target object. For example, the control apparatus 8 may calculate an ideal height of the measurement target object (for example, the height of the surface CS#1 that is a basis) based on the image captured by the imaging apparatus 72. In this case, the image that is captured by the imaging apparatus 72 and that indicates the state of the plurality of spots may be regarded to include information related to the ideal height of the measurement target object. For example, the control apparatus 8 may calculate a difference between the ideal height of the measurement target object (for example, the height of the surface CS#1 that is the basis) and an actual height of the measurement target object (for example, the height of the surface CS#2 or #3) based on the image captured by the imaging apparatus 72. In this case, the image that is captured by the imaging apparatus 72 and that indicates the state of the plurality of spots may be regarded to include information related to the difference between the ideal height of the measurement target object (for example, the height of the surface CS#1 that is the basis) and the actual height of the measurement target object (for example, the height of the surface CS#2 or #3).

The imaging apparatus 72 may be attached to the head housing 213. Namely, the imaging apparatus 72 may be disposed at a position that is fixed relative to the irradiation optical system 211 (especially, the terminal optical element 2112 thereof) contained in the head housing 213. In this case, the movement of the material nozzle 212 along the Z-axis by the above-described nozzle driving system 23 results in a change of the position of the material nozzle 212 relative to the imaging apparatus 72 (for example, the optical reception element 721 thereof). Namely, a relative position of the imaging apparatus 72 (for example, the optical reception element 721 thereof) and the material nozzle 212 may be changeable. Note that the movement of the material nozzle 212 along the Z-axis by the above-described nozzle driving system 23 results in the change of the relative position of the material nozzle 212 and the irradiation optical system 211 (especially, the terminal optical element 2112) as descried above. Thus, it may be regarded that the change of the relative position of the material nozzle 212 and the irradiation optical system 211 (especially, the terminal optical element 2112) results in the change of the relative position of the imaging apparatus 72 (for example, the optical reception element 721 thereof) and the material nozzle 212.

The control apparatus 8 is configured to control an operation of the processing system SYSa. The control apparatus 8 may include an arithmetic apparatus and a storage apparatus. The arithmetic apparatus may include at least one of a CPU (Central Processing Unit) and a GPU (Graphic Processing Unit), for example. The storage apparatus may include a memory. The control apparatus 8 serves as an apparatus for controlling the operation of the processing system SYSa by means of the arithmetic apparatus executing a computer program. The computer program is a computer program that allows the arithmetic apparatus to execute (namely, to perform) a below-described operation that should be executed by the control apparatus 8. Namely, the computer program is a computer program that allows the control apparatus 8 to function so as to make the processing system SYSa execute the below-described operation. The computer program executed by the arithmetic apparatus may be recorded in the storage apparatus (namely, a recording medium) of the control apparatus 8, or may be recorded in any recording medium (for example, a hard disk or a semiconductor memory) that is built in the control apparatus 8 or that is attachable to the control apparatus 8. Alternatively, the arithmetic apparatus may download the computer program that should be executed from an apparatus disposed at the outside of the control apparatus 8 through a network interface.

For example, the control apparatus 8 may control an emitting aspect of the processing light EL by the irradiation optical system 211. The emitting aspect may include at least one of the intensity of the processing light EL and emitting timing of the processing light EL, for example. When the processing light EL includes the pulsed light, the emitting aspect may include at least one of an ON time of the pulsed light, an emission cycle of the pulsed light and a ratio (what we call a duty ratio) of a length of the ON time of the pulsed light and a length of the emission cycle of the pulsed light, for example. Furthermore, the control apparatus 8 may control a moving aspect of the processing head 21 by the head driving system 22. Furthermore, the control apparatus 8 may control a moving aspect of the material nozzle 212 by the nozzle driving system 23. The control apparatus 8 may control a moving aspect of the stage 31 by the stage driving system 32. The moving aspect may include at least one of a moving distance, a moving speed, a moving direction and a moving timing (a moving period), for example. Moreover, the control apparatus 8 may control a supply aspect of the build materials M by the material nozzle 212. The supply aspect may include at least one of the supplied amount (especially, the supplied amount per unit time) and a supply timing (a supply period).

The control apparatus 8 may not be disposed in the processing system SYSa. For example, the control apparatus 8 may be disposed at the outside of the processing system SYSa as a server or the like. In this case, the control apparatus 8 may be connected to the processing system SYSa through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 8 and the processing system SYSa may be configured to transmit and receive various information through the network. Moreover, the control apparatus 8 may be configured to transmit information such as a command and a control parameter to the processing system SYSa through the network. The processing system SYSa may include a reception apparatus that is configured to receive the information such as the command and the control parameter from the control apparatus 8 through the network. The processing system SYSa may include a transmission apparatus that is configured to transmit the information such as the command and the control parameter to the control apparatus 8 through the network (namely, an output apparatus that is configured to output information to the control apparatus 8). Alternatively, a first control apparatus that is configured to perform a part of the arithmetic processing performed by the control apparatus 8 may be disposed in the processing system SYSa and a second control apparatus that is configured to perform another part of the arithmetic processing performed by the control apparatus 8 may be disposed at an outside of the processing system SYSa.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 8 may include. Moreover, the recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the control apparatus 8 by means of the control apparatus 8 (namely, a computer) executing the computer program, may be realized by a hardware such as a predetermined gate array (a FPGA, an ASIC) of the control apparatus 8, or may be realized in a form in which the logical process block and a partial hardware module that realizes a partial element of the hardware are combined.

### (1-2) Operation of Processing system SYSa

Next, an operation of the processing system SYSa will be described. As described above, the processing system SYSa performs the build operation for forming the three-dimensional structural object ST by performing the additive processing on the workpiece W. Furthermore, the processing system SYSa performs a nozzle movement operation for moving the material nozzle 212 by controlling the nozzle driving system 23 based on the measured result by the measurement apparatus 7 in at least a part of a period during which the build operation is performed. Thus, in the below-described description, the build operation and the nozzle movement operation will be described in order.

### (1-2-1) Build Operation

Firstly, the build operation of the three-dimensional structural object ST will be described. As described above, the processing system SYSa forms the three-dimensional structural object ST by the Laser Metal Deposition. Thus, the processing system SYSa may form the three-dimensional structural object ST by performing an existing build operation based on the Laser Metal Deposition. Next, one example of the build operation of forming the three-dimensional structural object ST by using the Laser Metal Deposition will be briefly described.

The processing system SYSa forms the three-dimensional structural object ST on the workpiece W based on three-dimensional model data or the like (for example, CAD (Computer Aided Design) data) of the three-dimensional structural object ST that should be formed. Measured data of the solid object measured by at least one of a non-illustrated measurement apparatus disposed in the processing system SYSa and a three-dimensional shape measurement device disposed separately from the processing system SYSa may be used as the three-dimensional model data. The processing system SYSa sequentially forms a plurality of layered partial structural objects (it is referred to as the "structural layer" in the below-described description) SL that are arranged along the Z-axis direction in order to form the three-dimensional structural object ST, for example. For example, the processing system SYSa forms, one by one in order, the plurality of structural layers SL based on data of the plurality of layers that are obtained by slicing the model of the three-dimensional structural object ST along the Z-axis direction. As a result, the three-dimensional structural object ST that is a layered structural body in which the plurality of structural layers SL are layered is formed. Next, a flow of an operation for forming the three-dimensional structural object ST by forming the plurality of structural layers SL one by one in order will be described.

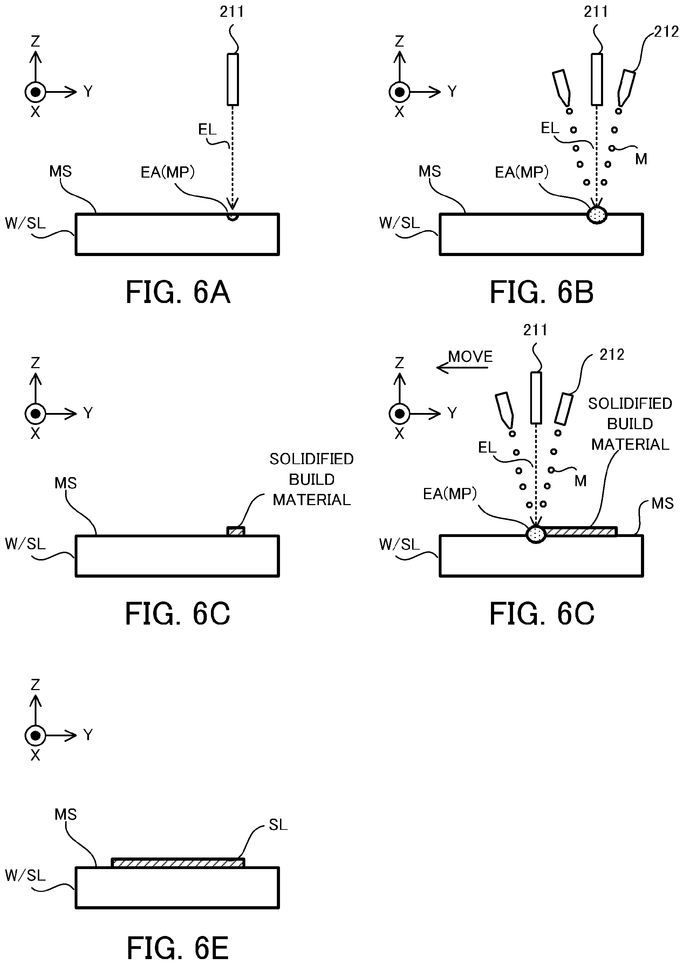

Firstly, with reference to FIG. 6A to FIG. 6E, an operation for forming each structural layer SL will be described. The processing system SYSa moves at least one of the processing head 21 and the stage 31 so that the target irradiation area EA is set at a desired area on the build surface MS that corresponds to the surface of the workpiece W or a surface of the formed structural layer SL, under the control of the control apparatus 8. Then, the processing system SYSa emits the processing light EL from the irradiation optical system 211 to the target irradiation areas EA. In this case, a condensed plane on which the processing light is condensed may be located on the build surface MS in the Z-axis direction. Alternatively, the condensed plane may be away from the build surface MS in the Z-axis direction. As a result, as illustrated in FIG. 6A, the melt pool (namely, a pool of a metal molten by the processing light EL) MP is formed on the build surface MS that is irradiated with the processing light EL. Moreover, the processing system SYSa supplies the build materials M from the material nozzle 212 under the control of the control apparatus 8. As a result, the build materials M are supplied to the melt pool MP. The build materials M supplied to the melt pool MP are molten by the processing light EL with which the melt pool MP is irradiated. Alternatively, the build material M supplied from the material nozzle 212 may be molten by the processing light EL before reaching the melt pool MP and molten build material M may be supplied to the melt pool MP. Then, when the melt pool MP is not irradiated with the processing light EL due to the movement of at least one of the processing head 21 and the stage 31, the build materials M molten in the melt pool MP are cooled and solidified (namely, coagulated). As a result, as illustrated in FIG. 6C, the solidified build materials M are deposited on the build surface MS.

The processing system SYSa repeats a series of build process including the formation of the melt pool MP by the irradiation with the processing light EL, the supply of the build materials M to the melt pool MP, the melting of the supplied build materials M and the solidification of the molten build materials M while relatively moving the processing head 21 relative to the build surface MS along at least one of the X-axis direction and the Y-axis direction, as illustrated in FIG. 6D. In this case, the processing system SYSa irradiates an area on the build surface MS on which the build object should be formed with the processing light EL and does not irradiate an area on the build surface MS on which the build object should not be formed with the processing light EL. Namely, the processing system SYSa moves the target irradiation area EA along a predetermined moving trajectory on the build surface MS and irradiates the build surface MS with the processing light EL at a timing based on an aspect of a distribution of the area on which the build object should be formed. As a result, the melt pool MP also moves on the build surface MS along a moving trajectory based on the moving trajectory of the target irradiation area EA. Specifically, the melt pool MP is formed in series at a part that is irradiated with the processing light EL in the area along the moving trajectory of the target irradiation area EA on the build surface MS. As a result, as illustrated in FIG. 6E, the structural layer SL that is an aggregation of the build object of the build materials M, which are solidified after being molten, is formed on the build surface MS. Namely, the structural layer SL that is an aggregation of the build object formed in a pattern based on the moving trajectory of the melt pool MP on the build surface MS (namely, the structural layer SL having a shape based on the moving trajectory of the melt pool MP in a planar view) is formed. Incidentally, when the target irradiation area EA is set at the area on which the build object should not be formed, the processing system SYSa may irradiate the target irradiation areas EA with the processing light EL and stop the supply of the build materials M. Moreover, when the target irradiation areas EA are set at the area on which the build object should not be formed, the processing system SYSa may supply the build materials M to the target irradiation areas EA and irradiate the target irradiation areas EA with the processing light EL having an intensity by which the melt pool MP is not formed.

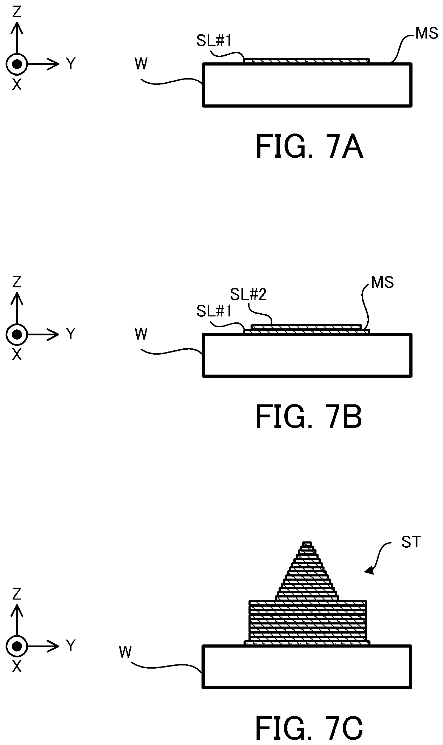

The processing system SYSa repeats the operation for forming the structural layer SL based on the three-dimensional model data under the control of the control apparatus 8. Specifically, the control apparatus 8 firstly generates slice data by performing a slicing process on the three-dimensional model data by a layer pitch before performing the operation for forming the structural layer SL. Then, the control apparatus 8 generates recipe information indicating a detail of an operation of the processing system SYSa for forming the three-dimensional structural object ST based on the slice data. The recipe information may include information related to a moving path of the processing head 21 by the head driving system 22 (what we call processing path information, and information for controlling the movement of the irradiation optical system 211 emitting the processing light EL), for example. The recipe information may include information related to a timing at which the irradiation optical system 211 emits the processing light EL (namely, information for controlling an operation of the light source 4 and / or the irradiation optical system 211 that emits the processing light EL), for example. The recipe information may include information related to an intensity of the processing light EL emitted from the irradiation optical system 211 (namely, information for controlling an operation of the light source 4 and / or the irradiation optical system 211 that emits the processing light EL), for example. The recipe information may be information obtained by combining these information. Alternatively, the control apparatus 8 may obtain the recipe information generated by an apparatus outside the processing system SYSa in addition to or instead of generating the recipe information. The processing system SYSa performs an operation for forming a first structural layer SL#1 on the build surface MS that corresponds to the surface of the workpiece W based on the recipe information corresponding to the structural layer SL#1. Namely, the processing system SYSa moves the irradiation optical system 211 by controlling the head driving system 22 based on the recipe information and controls the irradiation optical system 211 to emit the processing light EL having the intensity defined by the recipe information at a desired timing defined by the recipe information. As a result, as illustrated in FIG. 7A, the structural layer SL#1 is formed on the build surface MS. Then, the processing system SYSa sets a surface (namely, an upper surface) of the structural layer SL#1 to be a new build surface MS and forms a second structural layer SL#2 on the new build surface MS. In order to form the structural layer SL#2, firstly, the control apparatus 8 controls at least one of the head driving system 22 and the stage driving system 32 so that the processing head 21 moves along the Z-axis direction relative to the stage 31. Specifically, the control apparatus 8 controls at least one of the head driving system 22 and the stage driving system 32 to move the processing head 21 toward the +Z-axis side and / or to move the stage 31 toward the -Z-axis direction so that the target irradiation area EA is set on the surface of the structural layer SL#1 (namely, the new build surface MS). Then, the processing system SYSa forms the structural layer SL#2 on the structural layer SL#1 based on the recipe information corresponding to the structural layer SL#2, by performing an operation that is the same as the operation for forming the structural layer SL#1 under the control of the control apparatus 8. As a result, as illustrated in FIG. 7B, the structural layer SL#2 is formed. Then, the same process is repeated until all structural layers SL constituting the three-dimensional structural object ST that should be formed on the workpiece W are formed. As a result, the three-dimensional structural object ST is formed by a layered structural object in which the plurality of structural layers SL are layered, as illustrated in FIG. 7C.

### (1-2-2) Nozzle Movement Operation

Next, the nozzle movement operation will be described. As described above, the nozzle movement operation is the operation for moving the material nozzle 212 by controlling the nozzle driving system 23 based on the measured result by the measurement apparatus 7 (namely, for controlling the material nozzle 212 based on the measured result by the measurement apparatus 7) in at least a part of the period during which the build operation is performed. As described above, when the material nozzle 212 moves, the distance (specifically, the distance in the Z-axis) between the material nozzle 212 and the upper surface of the workpiece W changes. Thus, the nozzle movement operation may be regarded to be an operation for changing the distance (specifically, the distance in the Z-axis) between the material nozzle 212 and the upper surface of the workpiece W based on the measured result by the measurement apparatus 7. Moreover, as described above, when the material nozzle 212 moves, the position of the concentration area CP and the distance (specifically, the distance along the Z-axis) between the upper surface of the workpiece W and the concentration area CP at which the build materials M supplied from the material nozzles 212 are concentrated change. Thus, the nozzle movement operation may be regarded to be an operation for changing the position of the concentration area CP and the distance (specifically, the distance along the Z-axis) between the upper surface of the workpiece W and the concentration area CP based on the measured result by the measurement apparatus 7. Moreover, as described above, when the material nozzle 212 moves, the relative position (for example, the relative position along the Z-axis) of the material nozzle 212 and the irradiation optical system 211 (especially, the terminal optical element 2112) changes. Thus, the nozzle movement operation may be regarded to be an operation for changing the relative position (for example, the relative position along the Z-axis) of the material nozzle 212 and the irradiation optical system 211 (especially, the terminal optical element 2112) based on the measured result by the measurement apparatus 7. Moreover, as described above, when the material nozzle 212 moves, the relative position (for example, the relative position along the Z-axis) of the measurement apparatus 7 and the material nozzle 212 changes. Thus, the nozzle movement operation may be regarded to be an operation for changing the relative position (for example, the relative position along the Z-axis) of the measurement apparatus 7 and the material nozzle 212 based on the measured result by the measurement apparatus 7. Specifically, the nozzle movement operation may be regarded to be an operation for changing the relative position (for example, the relative position along the Z-axis) of the material nozzle 212 and at least one of the plurality of measurement light emission apparatuses 71 based on the measured result by the measurement apparatus 7. The nozzle movement operation may be regarded to be an operation for changing the relative position (for example, the relative position along the Z-axis) of the imaging apparatus 72 (for example, the optical reception element 721 thereof) and the material nozzle 212 based on the measured result by the measurement apparatus 7.

In the first example embodiment, the processing system SYSa performs the nozzle movement operation to control a height of the build object formed by the build operation. Next, a technical reason why the height of the build object is controllable by performing the nozzle movement operation will be described.

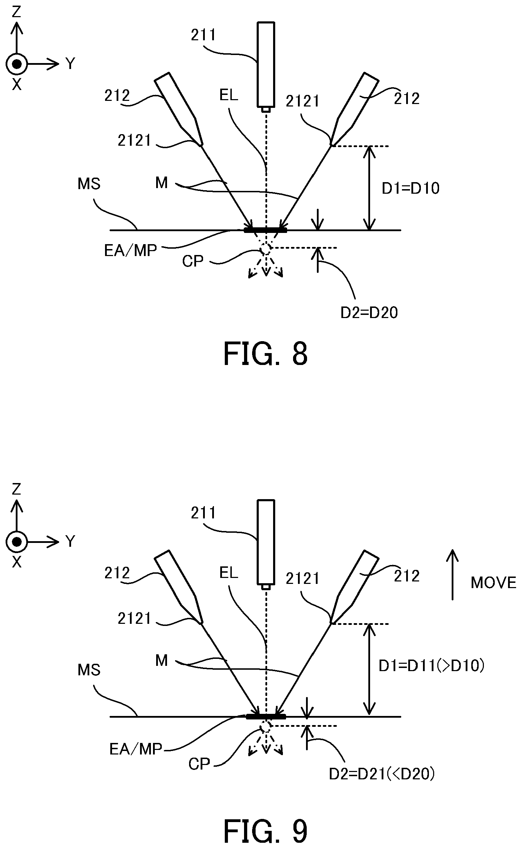

Specifically, as described above, the nozzle driving system 23 moves the material nozzle 212 along the Z-axis. As a result, when the material nozzle 212 moves, a distance (specifically, a distance along the Z-axis) D1 between the material nozzle 212 and the build surface MS changes. Note that the distance D1 between the material nozzle 212 and the build surface MS may mean a distance between the material supply port 2121 of the material nozzle 212 and the build surface MS. Furthermore, when the material nozzle 212 moves along the Z-axis, the concentration area CP at which the build materials M supplied from the material nozzles 212 are concentrated also moves along the Z-axis. Thus, it can be said that the material nozzle 212 changes the concentration area CP (specifically, changes the position of the concentration area CP) by moving the material nozzle 212. As a result, a distance (specifically, a distance along the Z-axis) D2 between the concentration area CP and the build surface MS changes. For example, FIG. 8 illustrates the material nozzle 212 that is located so that the distances D1 an D2 are reference distances D10 and D20, respectively.

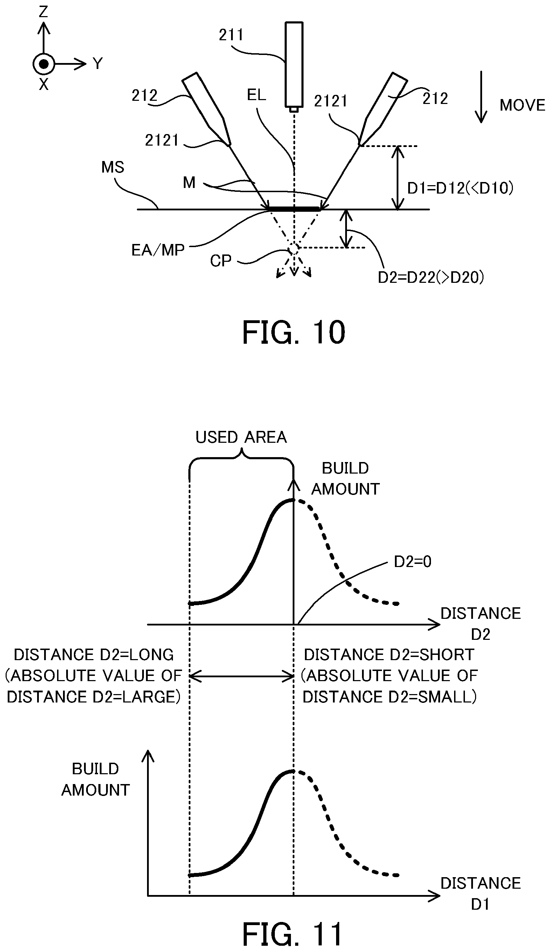

When the material nozzle 212 in a state illustrated in FIG. 8 moves toward the +Z side, the distance D1 changes to a distance D11 that is longer than the reference distance D10 and the distance D2 changes to a distance D21 that is shorter than the reference distance D20 as illustrated in FIG. 9. On the other hand, when the material nozzle 212 in the state illustrated in FIG. 8 moves toward the -Z side, the distance D1 changes to a distance D12 that is shorter than the reference distance D10 and the distance D2 changes to a distance D22 that is longer than the reference distance D20 as illustrated in FIG. 10.

Here, an amount of the build materials M supplied to the melt pool MP is larger as the distance D2 is shorter (namely, the distance D1 is longer). This is because the concentration area CP at which the build materials M are concentrated is closer to the build surface MS as the distance D2 is shorter. An amount of the build materials M molten in the melt pool MP is larger as the amount of the build materials M supplied to the melt pool MP is larger. An amount of the build materials M solidified on the build surface MS is larger as the amount of the build materials M molten in the melt pool MP is larger. As a result, the height (namely, a size along the Z-axis direction, and it is referred to as a "build amount") of the build object including the build materials M solidified on the build surface MS is higher. Thus, as illustrated in FIG. 11, the distance D2 and the build amount have a relationship in that the build amount is larger as the distance D2 is shorter. Namely, the distance D2 and the build amount have a relationship in that the build amount is smaller as the distance D2 is longer. Similarly, as illustrated in FIG. 11, the distance D1 and the build amount have a relationship in that the build amount is larger as the distance D1 is longer. Namely, the distance D1 and the build amount have a relationship in that the build amount is smaller as the distance D1 is shorter.

Note that FIG. 11 illustrates a graph in which the distance D2 in the case where the concentration area CP is located above the build surface MS is a positive distance and the distance D2 in the case where the concentration area CP is located below the build surface MS is a negative distance. In the present example embodiment, the processing system SYSa processes the workpiece W in the state where the concentration area CP is located below the build surface MS (namely, the build surface MS is located between the concentration area CP and the material nozzle 212). Thus, the distance D2 has a value in a range within an area (it is referred to as a used area) smaller than zero. In this case, the relationship in that the build amount is larger as the distance D2 is shorter means a relationship in that the build amount is larger as an absolute value of the distance D2 is smaller. Similarly, the relationship in that the build amount is smaller as the distance D2 is longer means a relationship in that the build amount is larger as the absolute value of the distance D2 is larger. Thus, in the below-described description, the distance D2 means the absolute value of the distance D2 if there is no special notation.

The processing system SYSa controls the build amount of the build object by performing the nozzle movement operation by using the relationship between the distance D2 (furthermore, the distance D1) and the build amount under the control of the control apparatus 8. Namely, the processing system SYSa controls the build amount of the build object by moving the material nozzle 212 to change the distance D2.

For example, the processing system SYSa may move the material nozzle 212 so that the distance D2 is shorter than the reference distance D20 when it wants to increase the actual build amount compared to the build amount in the case where the distance D2 is the reference distance D20 (it is referred to as a "reference build amount"). Namely, the processing system SYSa may move the material nozzle 212 so that the distance D1 is longer than the reference distance D10 when it wants to increase the actual build amount compared to the reference build amount in the case where the distance D1 is the reference distance D10. In other words, the processing system SYSa may increase the actual build amount compared to the reference build amount by moving the material nozzle 212 so that the distance D2 is shorter than the reference distance D20 (namely, the distance D1 is larger than the reference distance D10).

For example, the processing system SYSa may move the material nozzle 212 so that the distance D2 is longer than the reference distance D20 when it wants to decrease the actual build amount compared to the reference build amount in the case where the distance D2 is the reference distance D20. Namely, the processing system SYSa may move the material nozzle 212 so that the distance D1 is shorter than the reference distance D10 when it wants to decrease the actual build amount compared to the reference build amount in the case where the distance D1 is the reference distance D10. In other words, the processing system SYSa may decrease the actual build amount compared to the reference build amount by moving the material nozzle 212 so that the distance D2 is longer than the reference distance D20 (namely, the distance D1 is shorter than the reference distance D10).

Note that FIG. 9 and FIG. 10 illustrates an example in which the plurality of material nozzles 212 move toward same direction by the same moving distance. Namely, FIG. 9 and FIG. 10 illustrates an example in which the plurality of material nozzles 212 move in the same moving aspect. However, the nozzle driving system 23 may move at least one of the plurality of material nozzles 212 and may not move at least another one of the plurality of material nozzles 212. Even in this case, the fact remains that the distance D2 changes because at least one material nozzle 212 move. Alternatively, the nozzle driving system 23 may move at least one of the plurality of material nozzles 212 in a first moving aspect and may move at least another one of the plurality of material nozzles 212 in a second moving aspect that is different from the first moving aspect. For example, the nozzle driving system 23 may move at least one of the plurality of material nozzles 212 by a first moving distance and may move at least another one of the plurality of material nozzles 212 in a second moving distance that is different from the first moving distance. Namely, the nozzle driving system 23 may move the plurality of material nozzles 212 so that the moving distances of the plurality of material nozzles 212 are different from each other. Even in this case, the fact remains that the distance D2 changes because at least one material nozzle 212 moves.

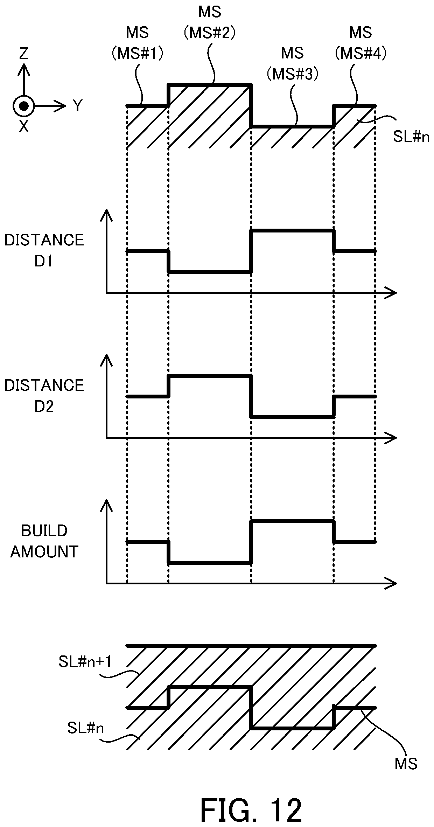

A situation in which new structural layer SL having a flat surface is formed on the concave and / or convex build surface MS is one example of a situation in which the build material is changed from the reference build amount. For example, a first uppermost part in FIG. 12 (a most upper diagram) illustrates a structural layer SL#n (note that n is an integer that is equal to or larger than 1) having a concave and / or convex surface. When new structural layer SL#n+1 is formed on the structural layer SL#n, the surface of the structural layer SL#n is set to be the build surface MS. As a result, the build surface MS is the concave and / or convex surface. In an example illustrated in FIG. 12, the build surface MS includes a build surface MS#1, a build surface MS#2 that is located at a position higher than (namely, as the +Z side of, the same is applied to the below-described description) the build surface MS#1, a build surface MS#3 that is located at a position lower than (namely, as the -Z side of, the same is applied to the below-described description) the build surface MS#1, and a build surface MS#4 that is located at the same height as the build surface MS#1. In this case, in order to make the surface of the newly formed structural layer SL#n+1 be flat, the processing system SYSa may perform the nozzle movement operation so that the height of the build object formed on the build surface MS#2 is lower than the height of the build object formed on the build surfaces MS#1 and MS#4 and the height of the build object formed on the build surface MS#3 is higher than the height of the build object formed on the build surfaces MS#1 and MS#4. Namely, the processing system SYSa may perform the nozzle movement operation so that the build amount on the build surface MS#2 is smaller than the build amount on the build surfaces MS#1 and MS#4 and the build amount on the build surface MS#3 is larger than the build amount on the build surfaces MS#1 and MS#4.

Specifically, as illustrated in a second uppermost part FIG. 12, the processing system SYSa may move the material nozzle 212 so that the distance D1 between the build surface MS#2 and the material nozzle 212 in a period during which the build object is formed on the build surface MS#2 is shorter than the distance D1 between the build surfaces MS#1 and MS#4 and the material nozzle 212 in a period during which the build object is formed on the build surfaces MS#1 and MS#4. Namely, as illustrated in a third uppermost part FIG. 12, the processing system SYSa may move the material nozzle 212 so that the distance D2 between the build surface MS#2 and the concentration area CP in the period during which the build object is formed on the build surface MS#2 is longer than the distance D2 between the build surfaces MS#1 and MS#4 and the concentration area CP in the period during which the build object is formed on the build surfaces MS#1 and MS#4. In other words, the processing system SYSa may move the material nozzle 212 so that the concentration area CP in the period during which the build object is formed on the build surface MS#2 is located below the concentration area CP in the period during which the build object is formed on the build surfaces MS#1 and MS#4 (furthermore, the concentration area CP in a period during which the build object is formed on the build surface MS#3). As a result, as illustrated in a fourth uppermost part in FIG. 12, the build amount on the build surface MS#2 is smaller than the build amount on the build surfaces MS#1 and MS#4.

As illustrated in the second uppermost part FIG. 12, the processing system SYSa may move the material nozzle 212 so that the distance D1 between the build surface MS#3 and the material nozzle 212 in the period during which the build object is formed on the build surface MS#3 is longer than the distance D1 between the build surfaces MS#1 and MS#4 and the material nozzle 212 in a period during which the build object is formed on the build surfaces MS#1 and MS#4. Namely, as illustrated in the third uppermost part FIG. 12, the processing system SYSa may move the material nozzle 212 so that the distance D2 between the build surface MS#3 and the concentration area CP in the period during which the build object is formed on the build surface MS#3 is shorter than the distance D2 between the build surfaces MS#1 and MS#4 and the concentration area CP in the period during which the build object is formed on the build surfaces MS#1 and MS#4. In other words, the processing system SYSa may move the material nozzle 212 so that the concentration area CP in the period during which the build object is formed on the build surface MS#3 is located above the concentration area CP in the period during which the build object is formed on the build surfaces MS#1 and MS#4 (furthermore, the concentration area CP in the period during which the build object is formed on the build surface MS#2). As a result, as illustrated in the fourth uppermost part in FIG. 12, the build amount on the build surface MS#3 is larger than the build amount on the build surfaces MS#1 and MS#4.

As a result, as illustrated in a fifth uppermost part in FIG. 12, the surface (especially, the upper surface) of the structural layer SL#n+1 that has been newly formed on the concave and / or convex build surface MS is the flat surface. More specifically, a flatness of the surface (especially, the upper surface) of the structural layer SL#n+1 that has been newly formed on the concave and / or convex build surface MS is larger than a flatness of the surface (especially, the upper surface) of the structural layer SL#n+1 formed when the nozzle movement operation is not performed.

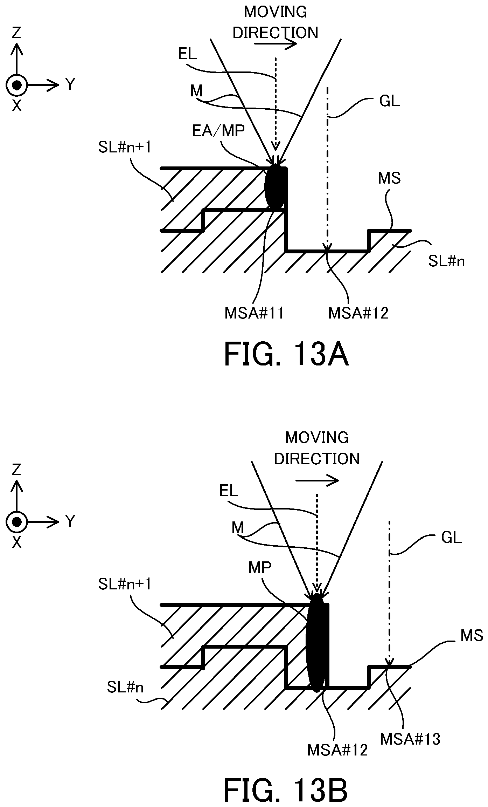

When the nozzle movement operation is performed in the case where the structural layer SL#n+1 is newly formed on the concave and / or convex build surface MS, the processing system SYSa obtains information related to a height of the build surface MS (namely, the surface of the structural layer SL#n) by using the measurement apparatus 7. In this case, the processing system SYSa may obtain the information related to the height of the build surface MS that is the surface of the structural layer SL#n in a period during which the structural layer SL#n+1 is formed. Specifically, as illustrated in FIG. 13A, the processing system SYSa may irradiate a second part MSA#12, which is different from a first part MSA#11, on the build surface MS with the measurement lights GL in a period during which the first part MSA#11 on the build surface MS is irradiated with the processing light EL. The second part MSA#12 may be a part located ahead of the first part MSA#11 (namely, ahead of the melt pool MP and the target irradiation area EA) along the moving direction of the irradiation optical system 211 in the build operation (namely, the moving direction defined by the recipe information, and the moving direction along at least one of the X-axis direction and the Y-axis direction). In this case, the second part MSA#12 corresponds to a part at which the build object constituting another part of the structural layer SL#n+1 will be formed after the build object constituting a part of the structural layer SL#n+1 is formed at the first part MSA#11. As a result, the processing system SYSa is capable of obtaining the information related to the height of the second part MSA#12 at which the build object will be formed later while building the build object at the first part MSA#11.

Then, as illustrated in FIG. 13B, the processing system SYSa performs the nozzle movement operation based on the information related to the height of the second part MSA#12, which has been obtained in advance, in a period during which the second part MSA#12 is irradiated with the processing light EL in order to form the build object at the second part MSA#12. Namely, the processing system SYSa moves the material nozzle 212 based on the information related to the height of the second part MSA#12 in the period during which the second part MSA#12 is irradiated with the processing light EL so that the build amount at the second part MSA#12 is a desired amount determined based on the height of the second part MSA#12. Note that the processing system SYSa may irradiate a third part MSA#13 (for example, a part located ahead of the second part MSA#12 along the moving direction of the irradiation optical system 211), which is different from the second part MSA#12, on the build surface MS with the measurement lights GL.

Alternatively, the processing system SYSa may irradiate the first part MSA#11 with the measurement lights GL in the period during which the first part MSA#11 on the build surface MS is irradiated with the processing light EL. Namely, the processing system SYSa may irradiate the part at which the melt pool MP is formed with the measurement lights GL. In this case, the processing system SYSa may obtain the information related to the height of the first part MSA#11 and move the material nozzle 212 based on the information related to the height of the first part MSA#11 while irradiating the first part SMA#11 with the processing light EL.

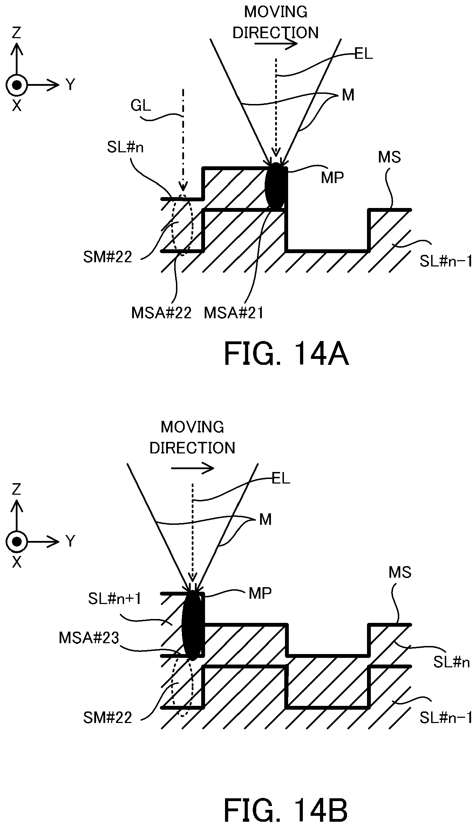

Alternatively, the processing system SYSa obtains the information related to the height of the surface of the structural layer SL#n, which has a surface on which the build surface MS will be set when the structural layer SL#n+1 is formed, in a period during which the structural layer SL#n, which has the surface on which the build surface MS will be set when the structural layer SL#n+1 is formed, is formed. Specifically, as illustrated in FIG. 14A, the processing system SYSa irradiates the build surface MS that corresponds t the surface of a structural layer #n-1 with the processing light EL in order to form the structural layer SL#n. In this case, the processing system SYSa may irradiate a build object SM#22, which has been formed as a part of the structural layer SL#n at a second part MSA#22 on the build surface MS that is different from a first part MSA#21, with the measurement lights GL in a period during which the first part MSA#21 on the build surface MS is irradiated with the processing light EL. The second part MSA#22 may be a part located behind of the first part MSA#21 (namely, behind the melt pool MP and the target irradiation area EA) along the moving direction of the irradiation optical system 211 in the build operation. In this case, the second part MSA#22 corresponds to a part at which the build object SM#22 constituting another part of the structural layer SL#n has been formed before the build object constituting a part of the structural layer SL#n is formed at the first part MSA#21. As a result, the processing system SYSa is capable of obtaining the information related to the height of the build object SM#22 that will be the build surface MS when the structural layer SL#n+1 is formed later while building the build object at the first part MSA#21.

Then, as illustrated in FIG. 14B, the processing system SYSa sets the surface of the structural layer SL#n to be new build surface MS and starts forming the structural layer SL#n+1 after completing forming the structural layer SL#n. In this case, the processing system SYSa performs the nozzle movement operation based on the information related to the height of the build object SM#22 (namely, the information related to the height of a third part MSA#23), which has been obtained in advance, in a period during which the third part MSA#23 is irradiated with the processing light EL in order to form the build object at the third part MSA#23 that corresponds to the surface of the build object SM#22 in the build surface MS. Namely, the processing system SYSa moves the material nozzle 212 based on the information related to the height of the third part MSA#23 when the third part MSA#23 is irradiated with the processing light EL so that the build amount at the third part MSA#23 is a desired amount determined based on the height of the third part MSA#23.

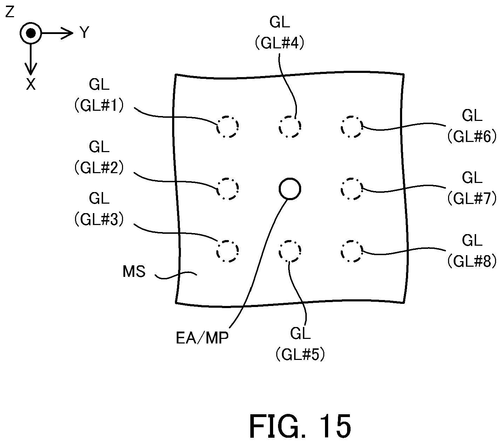

There is a possibility that the moving direction of the irradiation optical system 211 changes when the part, which is located ahead of or behind the part that is irradiated with the processing light EL (namely, the melt pool MP and the target irradiation area EA) along the moving direction of the irradiation optical system 211, is irradiated with the measurement lights GL as described above. In this case, when an irradiation position of the processing light EL and irradiation positions of the measurement lights GL are fixed in a plane along the XY plane, there is a possibility that the processing system SYSa is not capable of irradiating, with the measurement lights GL, the part which is located ahead of or behind the melt pool MP and the target irradiation area EA along the moving direction of the irradiation optical system 211. Specifically, although the processing system SYSa is capable of irradiating, with the measurement lights GL, the part which is located ahead of or behind the melt pool MP and the target irradiation area EA along the moving direction of the irradiation optical system 211 when the irradiation optical system 211 moves along a first moving direction, there is a possibility that the processing system SYSa is not capable of irradiating, with the measurement lights GL, the part which is located ahead of or behind the melt pool MP and the target irradiation area EA along the moving direction of the irradiation optical system 211 when the irradiation optical system 211 moves along a second moving direction intersecting with the first moving direction. Thus, the processing system SYSa may include a plurality of emission apparatus groups each of which includes the plurality of measurement light emission apparatuses 71 emitting the intersecting measurement lights GL, respectively. The plurality of emission apparatus groups are disposed so that a position at which the measurement lights GL emitted from one emission apparatus group intersect with each other is different from a position at which the measurement lights GL emitted from another emission apparatus group intersect with each other along at least one of the X-axis direction and the Y-axis direction. For example, as illustrated in FIG. 15, the processing system SYSa may include (i) a first emission apparatus group including the plurality of measurement light emission apparatuses 71 that respectively emit the plurality of measurement lights GL#1 intersecting with each other at a position that is away from the melt pool MP and the target irradiation area EA toward the -Y side and the -X side, (ii) a second emission apparatus group including the plurality of measurement light emission apparatuses 71 that respectively emit the plurality of measurement lights GL#2 intersecting with each other at a position that is away from the melt pool MP and the target irradiation area EA toward the -X side, (iii) a third emission apparatus group including the plurality of measurement light emission apparatuses 71 that respectively emit the plurality of measurement lights GL#3 intersecting with each other at a position that is away from the melt pool MP and the target irradiation area EA toward the -Y side and the +X side, (iv) a fourth emission apparatus group including the plurality of measurement light emission apparatuses 71 that respectively emit the plurality of measurement lights GL#4 intersecting with each other at a position that is away from the melt pool MP and the target irradiation area EA toward the -X side, (v) a fifth emission apparatus group including the plurality of measurement light emission apparatuses 71 that respectively emit the plurality of measurement lights GL#5 intersecting with each other at a position that is away from the melt pool MP and the target irradiation area EA toward the +X side, (vi) a sixth emission apparatus group including the plurality of measurement light emission apparatuses 71 that respectively emit the plurality of measurement lights GL#6 intersecting with each other at a position that is away from the melt pool MP and the target irradiation area EA toward the +Y side and the -X side, (vii) a seventh emission apparatus group including the plurality of measurement light emission apparatuses 71 that respectively emit the plurality of measurement lights GL#7 intersecting with each other at a position that is away from the melt pool MP and the target irradiation area EA toward the +Y side, and (viii) a eighth emission apparatus group including the plurality of measurement light emission apparatuses 71 that respectively emit the plurality of measurement lights GL#8 intersecting with each other at a position that is away from the melt pool MP and the target irradiation area EA toward the +Y side and the +X side. In this case, even when the moving direction of the irradiation optical system 211 changes, the processing system SYSa is capable of irradiating, with the measurement lights GL, the part which is located ahead of or behind the melt pool MP and the target irradiation area EA along this moving direction. Alternatively, the measurement light emission apparatus 71 may change the irradiation position of the measurement light GL. For example, the measurement light emission apparatus 71 may change the irradiation position of the measurement light GL so that the part which is located ahead of or behind the melt pool MP and the target irradiation area EA along the moving direction of the irradiation optical system 211 is irradiated with the measurement light GL.

### (1-3) Technical Effect of Processing System SYSa in First Example Embodiment

As described above, the processing system SYSa is capable of controlling the build amount (as a result, the height of the structural layer SL) by performing the nozzle movement operation. Thus, the processing system SYSa is capable of properly forming the three-dimensional structural object ST having desired shape and size.

Especially, the processing system SYSa is capable of controlling the build amount (as a result, the height of the structural layer SL) by moving the material nozzle 212 independently from the irradiation optical system 211. Thus, the processing system SYSa is capable of performing the build operation without changing the recipe information, even when the nozzle movement operation is performed in at least a part of the period during which the build operation is performed. Thus, the processing system SYSa is capable of controlling the build amount (as a result, the height of the structural layer SL) by performing the nozzle movement operation without affecting the build operation.

### (2) Processing System SYS in Second Example Embodiment

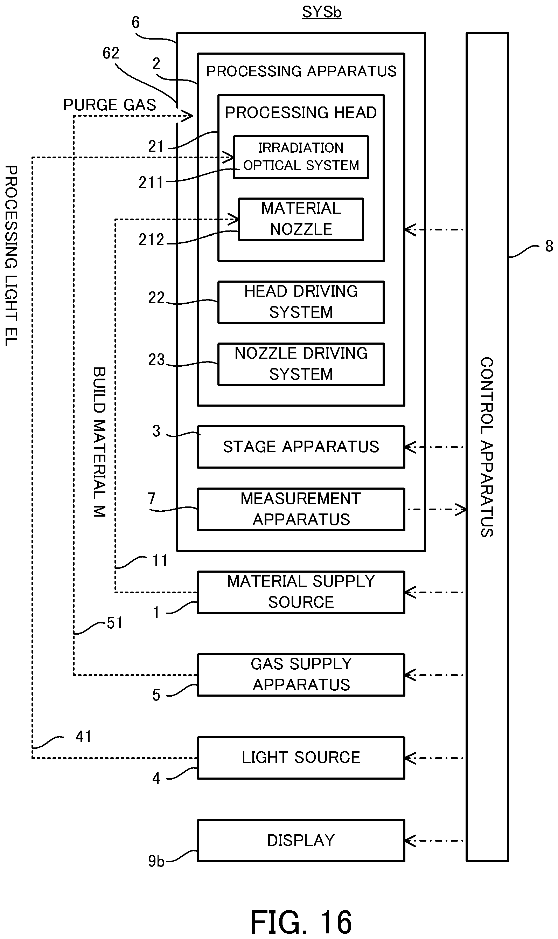

Next, with reference to FIG. 16, a processing system SYS in a second example embodiment (in the below-described description, it is referred to as a "processing system SYSb") will be described. FIG. 16 is a system configuration diagram that illustrates a system configuration of the processing system SYSb in the second example embodiment.

As illustrated in FIG. 16, the processing system SYSb in the second example embodiment is different from the above-described processing system SYSa in the first example embodiment in that it includes a display 9b. Other feature of the processing system SYSb may be the same as other feature of the processing system SYSa.

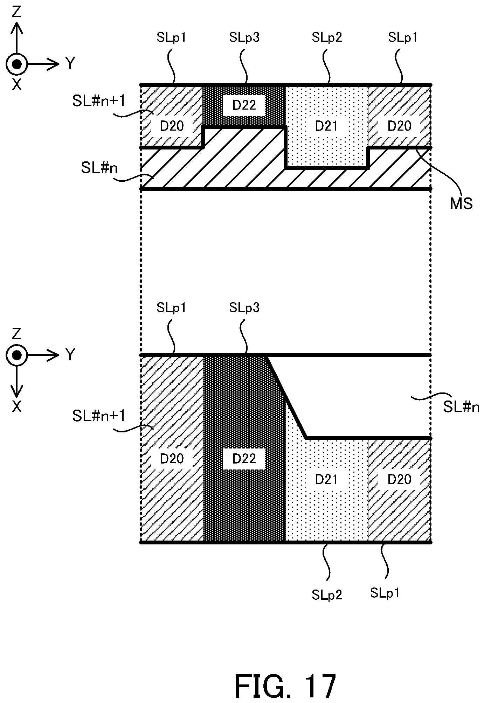

The display 9b is a display apparatus that is configured to display a desired image under the control of the control apparatus 8. In the second example embodiment, the display 9b may display an image including information related to the build operation. For example, as illustrated in FIG. 17 that is a planar view illustrating one example of the image displayed on the display 9b, when the build operation for forming the structural layer SL#n+1 on the structural layer SL#n, the display 9b may display an image including information related to a position of the structural layer SL#n+1 formed by the additive processing. Namely, the display 9b may display an image including information related to a position at which the additive processing is performed on the build surface MS in order to form the structural layer SL#n+1. In an example illustrated in FIG. 17, the display 9b displays, as the image including the information related to the position at which the additive processing is performed (namely, the information related to the position of the structural layer SL#n+1), an image that indicates the formed structural layer SL#n+1 by using a hatched area.

The display 9b may display an image including information related to the nozzle movement operation. For example, the nozzle movement operation changes the distance D2 between the concentration area CP and the build surface MS (furthermore, the distance D1 between the material nozzle 212 and the build surface MS) when each part of the structural layer SL#n+1 is formed. In this case, the display 9b may display an image that indicates the information related to the position at which the additive processing is performed in a display aspect based on the difference of the distance D2 (alternatively, the distance D1) when the additive processing is performed. For example, the display 9b may display a first part SLp1 of the structural layer SL#n+1 formed in a state where the distance D2 is the reference distance D20, a second part SLp2 of the structural layer SL#n+1 formed in a state where the distance D2 is the distance D21, and a third part SLp3 of the structural layer SL#n+1 formed in a state where the distance D2 is the distance D22 in different display aspects. In the example illustrated in FIG. 17, the display 9b displays the image including the information related to the position at which the additive processing is performed (namely, the information related to the position of the structural layer SL#n+1) so that a type of hatching indicating the first part SLp1, a type of hatching indicating the second part SLp2, and a type of hatching indicating the third part SLp3 are different from one another.

Alternatively, the display 9b may display, together with each part of the structural layer SL#n+1, information indicating the distance D2 (alternatively, the distance D1) when each part is formed, in addition to or instead of displaying each part of the structural layer SL#n+1 in different display aspects. Specifically, for example, as illustrated in FIG. 17, the display 7b may display, together with the first part SLp1, numerical information indicating that the distance D2 is the reference distance D20 when the first part PLp1 is formed, may display, together with the second part SLp2, numerical information indicating that the distance D2 is the distance D21 when the second part PLp2 is formed, and may display, together with the third part SLp3, numerical information indicating that the distance D2 is the distance D22 when the third part PLp3 is formed.

The processing system SYSb in the second example embodiment is capable of achieving an effect that is the same as the effect achievable by the above-described processing system SYSa in the first example embodiment. Furthermore, the processing system SYSb is configured to display the image including at least one of the information related to the build operation and the information related to the nozzle movement operation. Thus, the processing system SYSb may present, to an operator of the processing system SYSb, at least one of the information related to the build operation and the information related to the nozzle movement operation. For example, processing system SYSb may present, to the operator, a position at which the build object is formed in a state where height of the material nozzle 212 from the build surface MS is changed by the nozzle movement operation.

Note that the processing system SYSb may include an output apparatus that is configured to output any information, in addition to or instead of the display 9b. The output apparatus may be configured to output at least one of the information related to the build operation and the information related to the nozzle movement operation. At least one of a speaker that outputs any information as sound and a printer that outputs a paper medium on which any information is printed is one example of the output apparatus.

### (3) Processing System SYS in Third Example Embodiment

Next, a processing system SYS in a third example embodiment (in the below-described description, it is referred to as a "processing system SYSc") will be described. The processing system SYSc in the third example embodiment is different from the above-described processing system SYSa in the first example embodiment in that the nozzle driving system 23 moves the material nozzle 212 along at least one of the θX direction and θY direction, in addition to or instead of moving the material nozzle 212 along the Z-axis. Namely, the processing system SYSc is different from the processing system SYSa in that the nozzle driving system 23 rotates the material nozzle 212 around an rotational axis along at least one of the X-axis and the Y-axis. The processing system SYSc is different from the processing system SYSa in that it performs the nozzle movement operation for rotating the material nozzle 212 around the rotational axis along at least one of the X-axis and the Y-axis, in addition to or instead of the nozzle movement operation for moving the material nozzle 212 along the Z-axis. Other feature of the processing system SYSb may be the same as other feature of the processing system SYSa. Note that the nozzle movement operation for rotating the material nozzle 212 around the rotational axis may be referred to as a nozzle rotation operation.

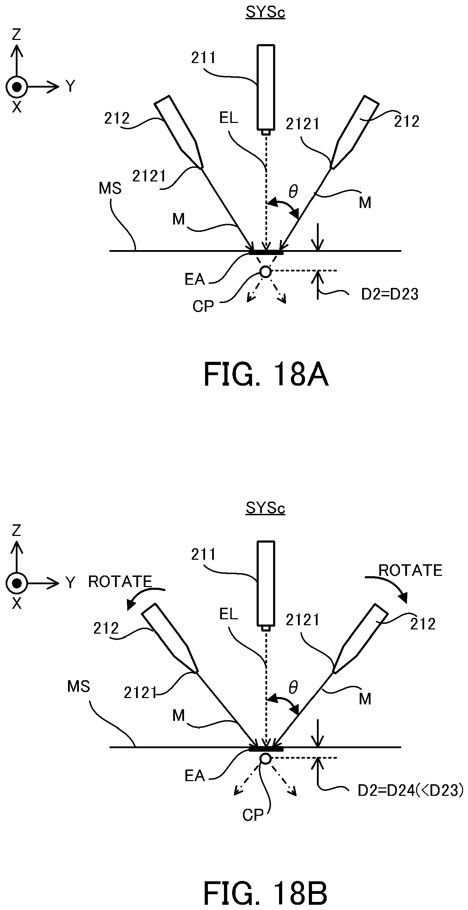

When the material nozzle 212 rotates around the rotational axis along at least one of the X-axis and the Y-axis, the distance D2 between the concentration area CP and the build surface MS changes, as with the case where the material nozzle 212 moves along the Z-axis. A technical reason will be described with reference to FIG. 18A and FIG. 18B. FIG. 18A is a cross-sectional view that illustrates the material nozzle 212 before it is rotated around the rotational axis along at least one of the X-axis and the Y-axis, and FIG. 18B is a cross-sectional view that illustrates the material nozzle 212 after it has been rotated around the rotational axis along at least one of the X-axis and the Y-axis (the X-axis in an example illustrated in FIG. 18B).

As illustrated in FIG. 18A and FIG. 18B, when the material nozzle 212 rotates around the rotational axis along at least one of the X-axis and the Y-axis, a direction of the material nozzle 212 (namely, a direction toward which the material nozzle 212 is directed, and more specifically, a direction toward which the material supply port 2121 is directed) changes. For example, the direction of the material nozzle 212 relative to the irradiation optical system 211 (for example, the terminal optical element 2112 thereof) changes. For example, a relative directional relationship between the irradiation optical system 211 (for example, the terminal optical element 2112 thereof) and the material nozzle 212 (namely, a relative relationship between a direction toward which the irradiation optical system 211 (for example, the terminal optical element 2112 thereof) is directed and the direction toward which the material nozzle 212 is directed) changes. For example, the direction of the material nozzle 212 relative to the measurement apparatus 7 (for example, at least one of the measurement light emission apparatus 71 and the imaging apparatus 72) changes. For example, a relative directional relationship between the measurement apparatus 7 (for example, at least one of the measurement light emission apparatus 71 and the imaging apparatus 72) and the material nozzle 212 (namely, a relative relationship between a direction toward which the measurement apparatus 7 (for example, at least one of the measurement light emission apparatus 71 and the imaging apparatus 72) is directed and the direction toward which the material nozzle 212 is directed) changes. Thus, in the third example embodiment, the nozzle driving system 23 may be regarded to serve as a direction change apparatus that changes the direction of the material nozzle 212. When the direction of the material nozzle 212 changes, the supply direction of the build materials M from the material nozzle 212 changes. When the supply direction of the build materials M from the material nozzle 212 changes, the position of the concentration area CP at which the build materials M from the material supply ports 2121 of the plurality of material nozzles 212 are concentrated changes. In the example illustrated in FIG. 18A and FIG. 18B, the material nozzle 212 rotates so that an angle θ between the Z-axis and an axis along the supply direction of the build material M from the material nozzle 212 increases. In this case, the position of the concentration area CP changes to be closer to the build surface MS. Namely, the distance D2 between the concentration area CP and the build surface MS changes from a distance D23 illustrated in FIG. 18A to a distance D24 shorter than the distance D23 illustrated in FIG. 18B. On the other hand, although it is not illustrated in the drawings for the simple description, when the material nozzle 212 rotate so that the angle θ between the Z-axis and the axis along the supply direction of the build material M from the material nozzle 212 decreases in the example illustrated in FIG. 18A and FIG. 18B, the position of the concentration area CP changes to be farther away from the build surface MS. Namely, the distance D2 between the concentration area CP and the build surface MS changes from the distance D23 to a distance longer than the distance D23.

As already described in the first example embodiment, the distance D2 and the build amount have the relationship in that the build amount is larger as the distance D2 is shorter. Thus, the processing system SYSc in the third example embodiment is capable of controlling the build amount of the build object by changing the direction of the material nozzle 212 so as to change the distance D2, as with the processing system SYSa in the first example embodiment. As a result, the processing system SYSb in the second example embodiment is capable of achieving an effect that is the same as the effect achievable by the above-described processing system SYSa in the first example embodiment.

Note that FIG. 18A and FIG. 18B illustrate an example in which the plurality of material nozzles 212 rotate toward different rotational directions by same rotational amount (namely, signs of rotational angles are different and absolute values thereof are equal). However, the nozzle driving system 23 may change the direction of at least one of the plurality of material nozzles 212 and may not change the direction of at least another one of the plurality of material nozzles 212. Even in this case, the fact remains that the distance D2 changes, because the direction of at least one material nozzle 212 changes. Alternatively, the nozzle driving system 23 may change the direction of at least one of the plurality of material nozzles 212 in a first change aspect and may change the direction of at least another one of the plurality of material nozzles 212 in a second change aspect that is different from the first change aspect. For example, the nozzle driving system 23 may change the direction of at least one of the plurality of material nozzles 212 by a first rotational amount and may change the direction of at least another one of the plurality of material nozzles 212 by a second rotational amount that is different from the first rotational amount. Namely, the nozzle driving system 23 may change the directions of the plurality of material nozzles 212 so that change amounts of the directions of the plurality of material nozzles 212 are different from each other. Even in this case, the fact remains that the distance D2 changes, because the direction of at least one material nozzle 212 changes.

Moreover, the processing system SYSb in the second example embodiment described above may include a feature that is unique to the processing system SYSc in the third example embodiment. The feature that is unique to the processing system SYSc in the third example embodiment may include a feature related to the nozzle movement operation for changing the direction of the material nozzle 212, for example.

### (4) Processing System SYS in Fourth Example Embodiment

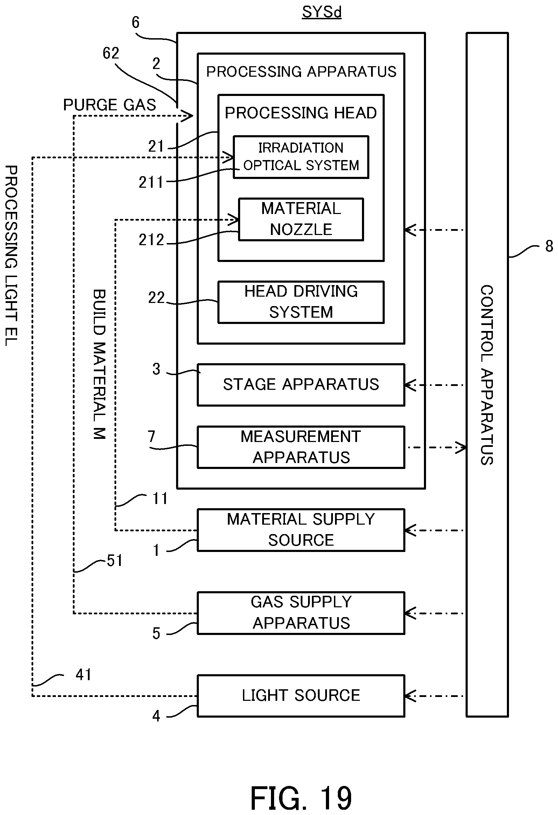

Next, a processing system SYS in a fourth example embodiment (in the below-described description, it is referred to as a "processing system SYSd") will be described. The processing system SYSd in the fourth example embodiment is different from the above-described processing system SYSa in the first example embodiment in that it controls the build amount (as a result, the height of the structural layer SL) by performing a supplied amount control operation for controlling the supplied amount (specifically, the supplied amount per unit time) of the build materials M from the material nozzle 212 based on the measured result by the measurement apparatus 7, in addition to or instead of performing the nozzle movement operation for moving the material nozzle 212 based on the measured result by the measurement apparatus 7. When the processing system SYSd does not perform the nozzle movement operation, the processing system SYSd may not include the nozzle driving system 23, as illustrated in FIG. 19 illustrating one example of a system configuration of the processing system SYSd. Other feature of the processing system SYSd may be the same as other feature of the processing system SYSa.

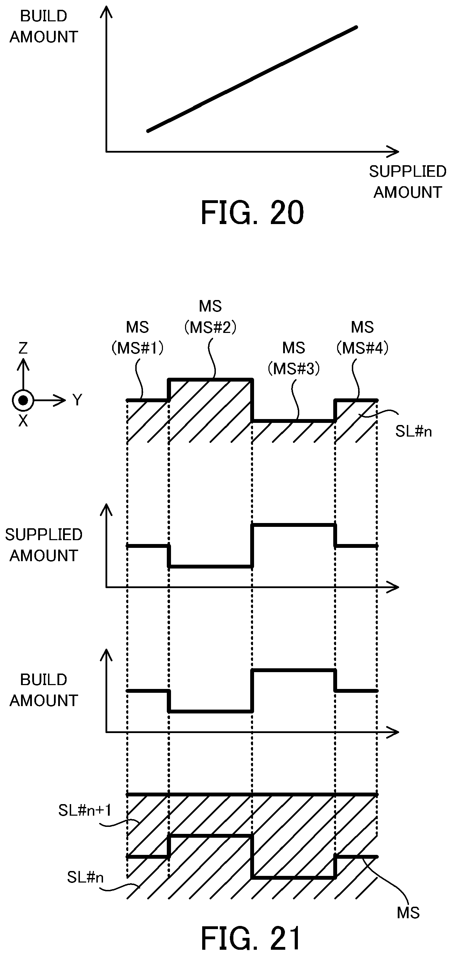

The supplied amount of the build materials M from the material nozzle 212 affects the build amount. Specifically, the amount of the build materials M supplied to the melt pool MP is lager as the supplied amount of the build materials M from the material nozzle 212 is larger. The amount of the build materials M molten in the melt pool MP is larger as the amount of the build materials M supplied to the melt pool MP is larger. The amount of the build materials M solidified on the build surface MS is larger as the amount of the build materials M molten in the melt pool MP is larger. As a result, the height (namely, the size along the Z-axis direction and the build amount) of the build object including the build materials M solidified on the build surface MS is higher. Thus, as illustrated in FIG. 20, the supplied amount of the build materials M and the build amount have a relationship in that the build amount is larger as the supplied amount of the build materials M is larger. Namely, the supplied amount of the build materials M and the build amount have a relationship in that the build amount is smaller as the supplied amount of the build materials M is smaller.

The processing system SYSd controls the build amount of the build object by performing the supplied amount control operation by using the relationship between the supplied amount of the build materials M and the build amount under the control of the control apparatus 8. Namely, the processing system SYSd controls the build amount of the build object by controlling the supplied amount of the build materials M based on the measured result by the measurement apparatus 7.

As one example, the supplied amount control operation performed when new structural layer SL having a flat surface is formed on the concave and / or convex build surface MS will be described. For example, a first uppermost part in FIG. 21 (a most upper diagram) illustrates the build surface MS including the build surfaces MS#1 to MS#4 illustrated in FIG. 12. In this case, in order to make the surface of the newly formed structural layer SL#n+1 be flat, the processing system SYSd may perform the supplied amount control operation so that the height of the build object formed on the build surface MS#2 is lower than the height of the build object formed on the build surfaces MS#1 and MS#4 and the height of the build object formed on the build surface MS#3 is higher than the height of the build object formed on the build surfaces MS#1 and MS#4. Namely, the processing system SYSd may perform the supplied amount control operation so that the build amount on the build surface MS#2 is smaller than the build amount on the build surfaces MS#1 and MS#4 and the build amount on the build surface MS#3 is larger than the build amount on the build surfaces MS#1 and MS#4.

Specifically, as illustrated in a second uppermost part FIG. 21, the processing system SYSd may control the supplied amount of the build materials M so that the supplied amount of the build materials M supplied to the build surface MS#2 in the period during which the build object is formed on the build surface MS#2 is smaller than the supplied amount of the build materials M supplied to the build surfaces MS#1 and MS#4 in the period during which the build object is formed on the build surfaces MS#1 and MS#4. As a result, as illustrated in a third uppermost part in FIG. 21, the build amount on the build surface MS#2 is smaller than the build amount on the build surfaces MS#1 and MS#4. On the other hand, as illustrated in the second uppermost part FIG. 21, the processing system SYSd may control the supplied amount of the build materials M so that the supplied amount of the build materials M supplied to the build surface MS#3 in the period during which the build object is formed on the build surface MS#3 is larger than the supplied amount of the build materials M supplied to the build surfaces MS#1 and MS#4 in the period during which the build object is formed on the build surfaces MS#1 and MS#4. As a result, as illustrated in the third uppermost part in FIG. 21, the build amount on the build surface MS#3 is larger than the build amount on the build surfaces MS#1 and MS#4. Thus, as illustrated in a fifth uppermost part in FIG. 21, the surface (especially, the upper surface) of the structural layer SL#n+1 that has been newly formed on the concave and / or convex build surface MS is the flat surface by performing the supplied amount control operation based on the information related to the position (the height) of the build surface MS indicated by the measured result by the measurement apparatus 7.

In order to control the supplied amount of the build materials M, the control apparatus 8 may control the material supply source 1. Specifically, the control apparatus 8 may control the supplied amount of the build materials M from the material nozzle 212 by controlling the supplied amount of the build materials M supplied from the material supply source 1 to the processing apparatus 2 (namely, the material nozzle 212). For example, the control apparatus 8 may decrease the supplied amount of the build materials M from the material nozzle 212 by decreasing the supplied amount of the build materials M supplied from the material supply source 1 to the processing apparatus 2. For example, the control apparatus 8 may decrease the supplied amount of the build materials M from the material nozzle 212 by decreasing the supplied amount of the build materials M supplied from the material supply source 1 to the processing apparatus 2.

In this manner, the processing system SYSd in the fourth example embodiment is capable of controlling the build amount (as a result, the height of the structural layer SL) by performing the supplied amount control operation. Thus, the processing system SYSd is capable of properly forming the three-dimensional structural object ST having desired shape and size, as with the above-described processing system SYSa.

Especially, the processing system SYSd is capable of controlling the build amount (as a result, the height of the structural layer SL) by controlling the supplied amount of the build materials M independently from the irradiation optical system 211. Thus, the processing system SYSd is capable of performing the build operation without changing the recipe information even when the supplied amount control operation is performed in at least a part of the period during which the build operation is performed. Thus, the processing system SYSd is capable of controlling the build amount (as a result, the height of the structural layer SL) by performing the supplied amount control operation without affecting the build operation, as with the above-described processing system SYSa.

Note that the control apparatus 8 may change the supplied amounts of the build materials M from the plurality of material nozzles 212. For example, the control apparatus 8 may change the supplied amounts of the build materials M from the plurality of material nozzles 212 by the same amount. Alternatively, the control apparatus 8 may change the supplied amount of the build materials M from at least one of the plurality of material nozzles 212, and may not change the supplied amount of the build materials M from at least another one of the plurality of material nozzles 212. Even in this case, the fact remains that the build amount changes, because the supplied amount of the build materials M from at least one material nozzle 212 changes. Alternatively, the control apparatus 8 may change the supplied amount of the build materials M from at least one of the plurality of material nozzles 212 in a first change aspect, and may change the supplied amount of the build materials M from at least another one of the plurality of material nozzles 212 in a second change aspect that is different from the first change aspect. For example, the control apparatus 8 may change the supplied amount of the build materials M from at least one of the plurality of material nozzles 212 by a first change amount, and may change the supplied amount of the build materials M from at least another one of the plurality of material nozzles 212 by a second change amount that is different from the first change amount. Namely, the control apparatus 8 may change the supplied amounts of the build materials M from the plurality of material nozzles 212 so that change amounts of the supplied amounts of the build materials M from the plurality of material nozzles 212 are different from each other. Even in this case, the fact remains that the build amount changes, because the supplied amount of the build materials M from at least one material nozzle 212 changes.

Moreover, at least one of the processing system SYSb in the second example embodiment to the processing system SYSc in the third example embodiment described above may include a feature that is unique to the processing system SYSd in the fourth example embodiment. The feature that is unique to the processing system SYSd in the fourth example embodiment may include a feature related to the supplied amount control operation, for example.

### (5) Processing System SYS in Fifth Example Embodiment

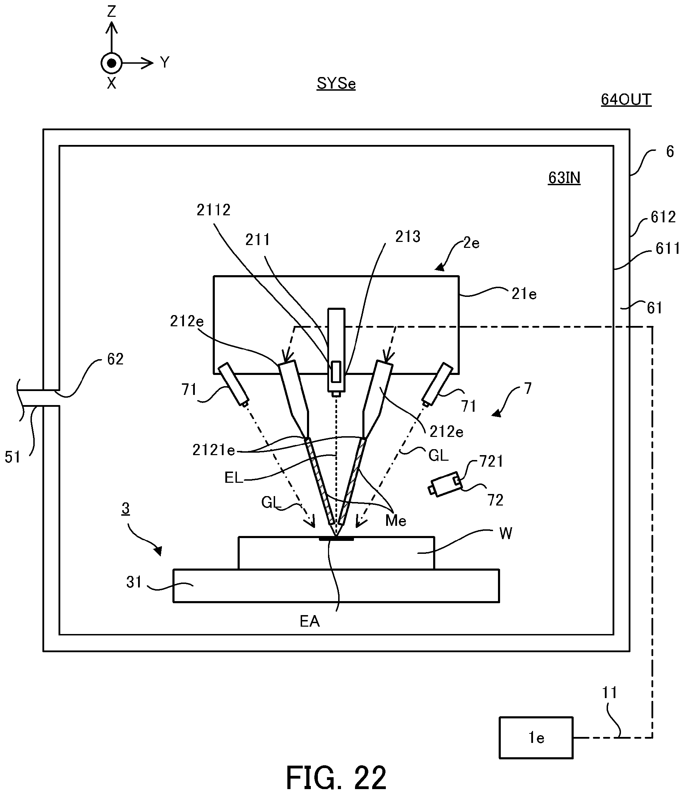

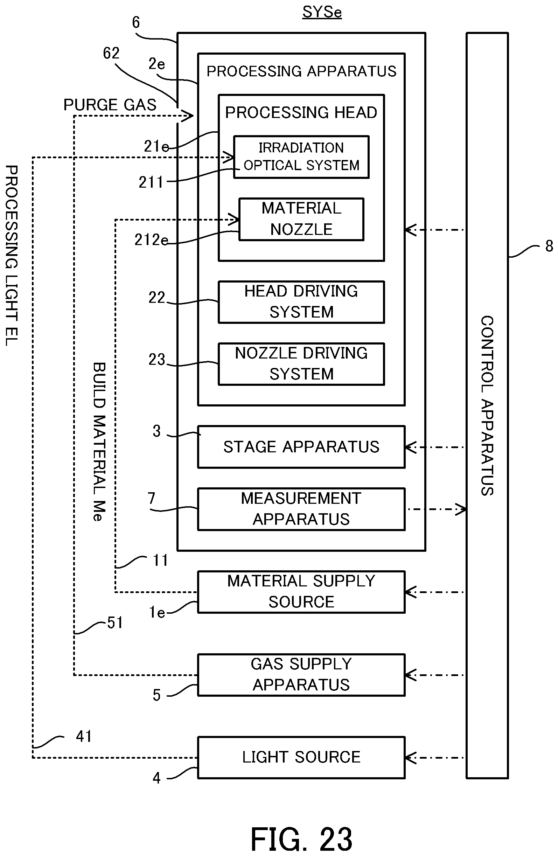

Next, with reference to FIG. 22 and FIG. 23, a processing system SYS in a fifth example embodiment (in the below-described description, it is referred to as a "processing system SYSe") will be described. FIG. 22 is a cross-sectional view that illustrates a configuration of the processing system SYSe in the fifth example embodiment. FIG. 23 is a system configuration diagram that illustrates a system configuration of the processing system SYSe in the fifth example embodiment.

As illustrated in FIG. 22 and FIG. 23, the processing system SYSe in the fifth example embodiment is the same as the above-described processing system SYSd in the fourth example embodiment in that it performs the supplied amount control operation. On the other hand, the processing system SYSe is different from the processing system SYSd in that it performs the build operation by using the wired-like build material Me.

In order to perform the build operation by using the wired-like build material Me, the processing system SYSe is different from the processing system SYSd in that it includes a material supply source 1e and a processing apparatus 2e instead of the material supply source 1 and the processing apparatus 2. Furthermore, the processing system SYSe is different from the processing system SYSd in that it may not include the mix apparatus 12. Other feature of the processing system SYSe may be the same as other feature of the processing system SYSa.

The material supply source 1e is different from the material supply source 1 that supplies the build materials M that is the powdery materials to the processing apparatus 2 in that it supplies the wired-like build material Me to the processing apparatus 2. Other feature of the material supply source 1e may be the same as other feature of the material supply source 1.

The processing apparatus 2e is different from the processing apparatus 2 in that it includes a processing head 21e instead of the processing head 21. Other feature of the processing apparatus 2e may be the same as other feature of the processing apparatus 2. The processing head 21e is different from the processing head 21 in that it includes a material nozzles 212e instead of the material nozzles 212. Other feature of the processing head 21e may be the same as other feature of the processing head 21. The material nozzle 212e is different from the material nozzle 212 that supplies the build materials M that is the powdery materials from the material supply port 2121 to the build surface MS (the melt pool MP on the build surface MS) in that it supplies the wired-like build material Me from a material supply port 2121e to the build surface MS (the melt pool MP on the build surface MS). Other feature of the material nozzle 212e may be the same as other feature of the material nozzle 212.

The processing system SYSe in the fifth example embodiment may also perform the supplied amount control operation for controlling the build material Me from the material nozzle 212e based on the measured result by the measurement apparatus 7, as with the processing system SYSd in the fourth example embodiment. For example, the processing system SYSe may control the build amount by controlling an amount (a feed amount) of the build material Me fed from the material supply source 1e to the processing apparatus 2e. As a result, the processing system SYSe is capable of achieving an effect that is the same as the effect achievable by the processing system SYSd. In addition, the processing system SYSd is capable of reducing an amount of the build material Me supplied to an outside of the melt pool MP (namely, the wasted build material Me that does not contribute to the formation the build object). Thus, the processing system SYSe is capable of improving an efficiency of use of the build material Me, compared to the processing system SYSd.

### (6) Processing System SYS in Sixth Example Embodiment

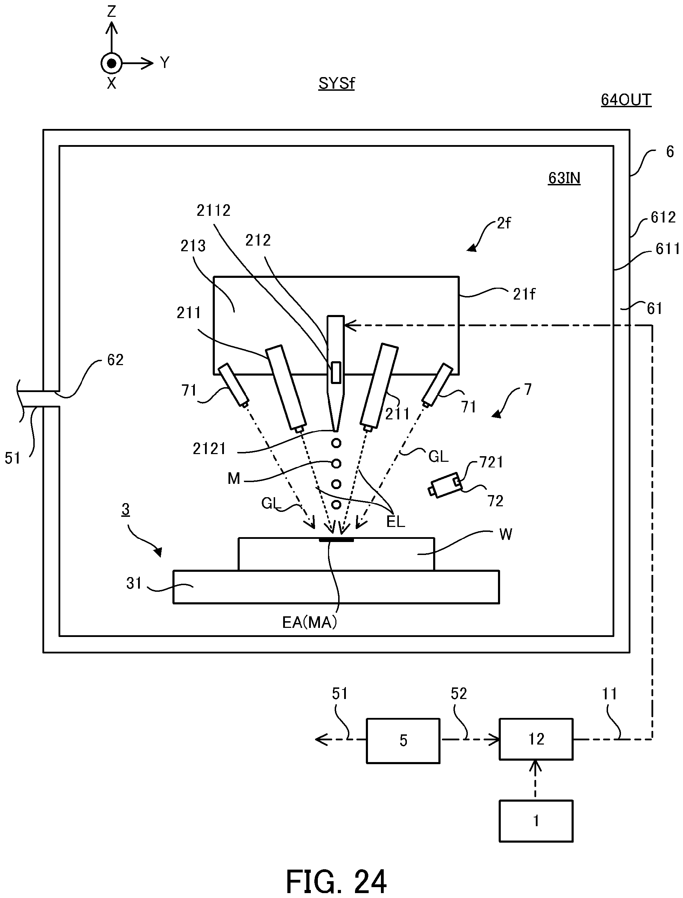

Next, with reference to FIG. 24, a processing system SYS in a sixth example embodiment (in the below-described description, it is referred to as a "processing system SYSf') will be described. FIG. 24 is a cross-sectional view that illustrates a configuration of the processing system SYSf in the sixth example embodiment.

As illustrated in FIG. 24, the processing system SYSf in the sixth example embodiment is different from the above-described processing system SYSa in the first example embodiment in that it includes a processing apparatus 2f instead of the processing apparatus 2. Other feature of the processing system SYSf may be the same as other feature of the processing system SYSa. The processing apparatus 2f is different from the processing apparatus 2 in that it includes a processing head 21f instead of the processing head 21. Other feature of the processing apparatus 2f may be the same as other feature of the processing apparatus 2. The processing head 21f is different from the processing head 21 in the number and the disposed position of the irradiation optical system 211 and the material nozzle 212. Other feature of the processing head 21f may be the same as other feature of the processing head 21.

In the sixth example embodiment, the processing head 21f includes a single material nozzle 212 and a plurality of irradiation optical systems 211. However, the processing head 21f may include the plurality of material nozzles 212. The processing head 21f may include a single irradiation optical system 211.

The material nozzle 212 is attached to the head housing 213 so as to supply the build materials M in a direct downward direction (namely, toward the -Z side) from the material nozzle 212. Namely, the material nozzle 212 is attached to the head housing 213 so as to supply the build materials M along a supply path along the Z-axis. On the other hand, the irradiation optical system 211 is attached to the head housing 213 so that the optical axis AX of the irradiation optical system 211 is inclined with respect to the Z-axis. Especially, the plurality of irradiation optical systems 211 are attached to the head housing 213 so as to emit the processing lights EL toward different directions, respectively. The plurality of irradiation optical systems 211 are attached to the head housing 213 so that the plurality of processing lights EL emitted from the plurality of irradiation optical systems 211 intersect with each other below the processing head 21f.

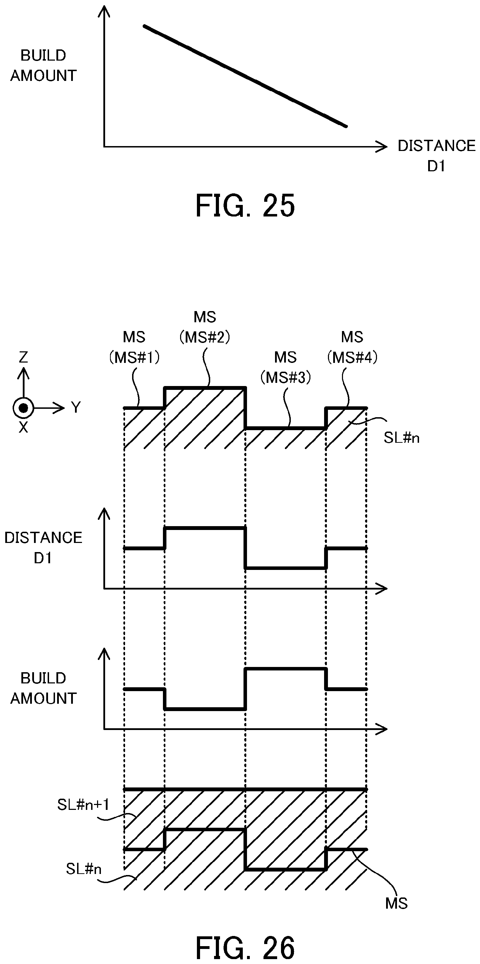

The processing system SYSf in which the material nozzle 212 and the irradiation optical systems 211 are disposed in this manner also performs the nozzle movement operation, as with the processing system SYSa. However, the sixth example embodiment is different form the first example embodiment in that the material nozzle 212 supplies the build materials M in the direct downward direction (namely, toward the -Z side). In this case, as illustrated in FIG. 25, the build amount and the distance D1 between the material nozzle 212 and the build surface MS have a relationship in that the build amount is smaller as the distance D1 is longer. Namely, the relationship between the distance D1 and the build amount in the sixth example embodiment is the reverse of the relationship between the distance D1 and the build amount in the first example embodiment. The reason is as follows. Since the material nozzle 212 supplies the build materials M in the direct downward direction, the build materials M suppled from the material nozzle 212 fall from the material nozzle 212 while spreading out. Namely, the build materials M suppled from the material nozzle 212 fall while gradually spreading outwardly as it fall downwardly. As a result, a distribution density of the build materials M on the build surface MS is smaller as the distance D1 is longer (namely, the build surface MS is farther away from the material nozzle 212). The amount of the build materials M supplied to the melt pool MP is smaller as the distribution density of the build materials M on the build surface MS is smaller. The amount of the build materials M molten in the melt pool MP is larger as the amount of the build materials M supplied to the melt pool MP is larger. The amount of the build materials M solidified on the build surface MS is smaller as the amount of the build materials M molten in the melt pool MP is smaller. As a result, the height (namely, the build amount) of the build object including the solidified build materials M is lower. Thus, as illustrated in FIG. 25, the build amount and the distance D1 have the relationship in that the build amount is smaller as the distance D1 is longer

The processing system SYSf controls the build amount of the build object by performing the nozzle movement operation by using the relationship between the distance D1 and the build amount under the control of the control apparatus 8. Namely, the processing system SYSf controls the build amount of the build object by moving the material nozzle 212 to change the distance D1.

As one example, the nozzle movement operation performed when new structural layer SL having a flat surface is formed on the concave and / or convex build surface MS will be described. For example, a first uppermost part in FIG. 26 (a most upper diagram) illustrates the build surface MS including the build surfaces MS#1 to MS#4 illustrated in FIG. 12. In this case, in order to make the surface of the newly formed structural layer SL#n+1 be flat, the processing system SYSf may perform the nozzle movement operation so that the height of the build object formed on the build surface MS#2 is lower than the height of the build object formed on the build surfaces MS#1 and MS#4 and the height of the build object formed on the build surface MS#3 is higher than the height of the build object formed on the build surfaces MS#1 and MS#4. Namely, the processing system SYSf may perform the nozzle movement operation so that the build amount on the build surface MS#2 is smaller than the build amount on the build surfaces MS#1 and MS#4 and the build amount on the build surface MS#3 is larger than the build amount on the build surfaces MS#1 and MS#4.

Specifically, as illustrated in a second uppermost part FIG. 26, the processing system SYSf may move the material nozzle 212 so that the distance D1 between the build surface MS#2 and the material nozzle 212 in the period during which the build object is formed on the build surface MS#2 is longer than the distance D1 between the build surfaces MS#1 and MS#4 and the material nozzle 212 in the period during which the build object is formed on the build surfaces MS#1 and MS#4. As a result, as illustrated in a third uppermost part in FIG. 26, the build amount on the build surface MS#2 is smaller than the build amount on the build surfaces MS#1 and MS#4. On the other hand, as illustrated in the second uppermost part FIG. 26, the processing system SYSf may move the material nozzle 212 so that the distance D1 between the build surface MS#3 and the material nozzle 212 in the period during which the build object is formed on the build surface MS#3 is shorter than the distance D1 between the build surfaces MS#1 and MS#4 and the material nozzle 212 in a period during which the build object is formed on the build surfaces MS#1 and MS#4. As a result, as illustrated in the third uppermost part in FIG. 26, the build amount on the build surface MS#3 is longer than the build amount on the build surfaces MS#1 and MS#4. Thus, as illustrated in a fifth uppermost part in FIG. 26, the surface (especially, the upper surface) of the structural layer SL#n+1 that has been newly formed on the concave and / or convex build surface MS is the flat surface by performing the nozzle movement operation based on the information related to the position (the height) of the build surface MS indicated by the measured result by the measurement apparatus 7.

In this manner, the processing system SYSf in the sixth example embodiment is capable of controlling the build amount (as a result, the height of the structural layer SL) by performing the nozzle movement operation, as with the processing system SYSa in the first example embodiment. Thus, the processing system SYSf is capable of achieving an effect that is the same as the effect achievable by the above-described processing system SYSa in the first example embodiment.

Moreover, at least one of the processing system SYSb in the second example embodiment to the processing system SYSe in the fifth example embodiment described above may include a feature that is unique to the processing system SYSf in the sixth example embodiment. The feature that is unique to the processing system SYSf in the sixth example embodiment may include a feature related to the number and the disposed position of the irradiation optical system 211 and the material nozzle 212, for example.

### (7) Processing System SYS in Seventh Example Embodiment

Next, a processing system SYS in a seventh example embodiment (in the below-described description, it is referred to as a "processing system SYSg") will be described. The processing system SYSg in the seventh example embodiment is different from the above-described processing system SYSa in the first example embodiment in that it controls the build amount (as a result, the height of the structural layer SL) by performing a converged position control operation for controlling a converged position FP of the processing light EL based on the measured result by the measurement apparatus 7, in addition to or instead of performing the nozzle movement operation for moving the material nozzle 212 based on the measured result by the measurement apparatus 7. Note that the converged position of the processing light EL may be a position at which a size of a cross-section intersecting with a propagating direction of the processing light EL is minimum along the propagating direction of the processing light EL.

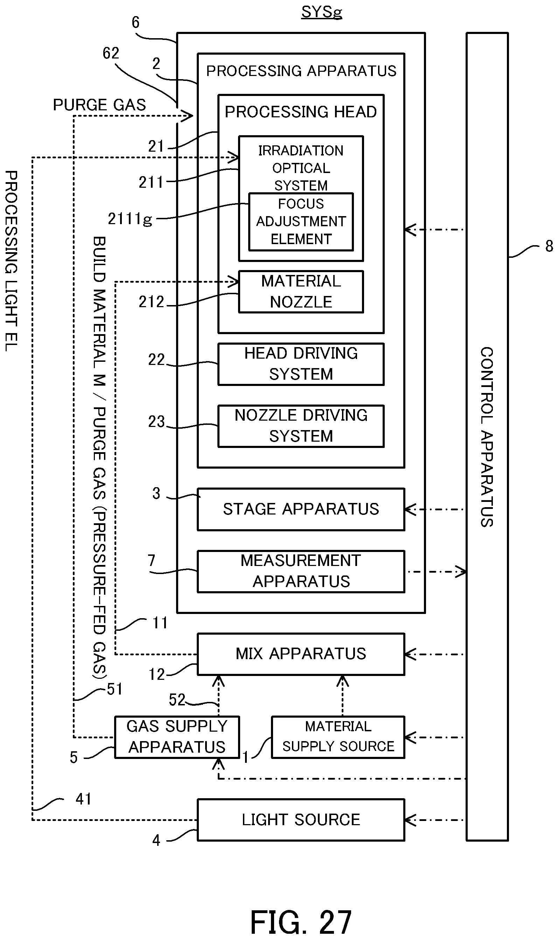

In order to perform the converged position control operation, the irradiation optical system 211 may include a focus adjustment element 2111g that is configured to control the converged position FP of the processing light EL, as illustrated in FIG. 27 that illustrates one example of a system configuration of the processing system SYSf. The focus adjustment element 2111g is an optical member that is configured to change the converged position FP of the processing light EL in a direction along the optical axis AX of the irradiation optical system 211 (namely, a direction along the Z-axis). An optical member including two optical elements that are disposed along the optical axis AX of the irradiation optical system 211 and a distance between which is changeable is one example of the focus adjustment element 2111g. Incidentally, when the processing system SYSf does not perform the nozzle movement operation, the processing system SYSf may not include the nozzle driving system 23. Other feature of the processing system SYSf may be the same as other feature of the processing system SYSa.

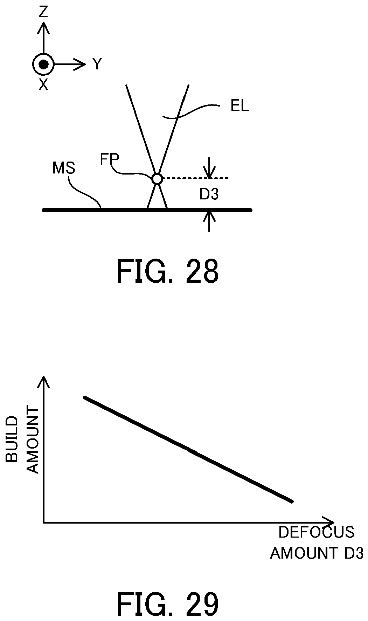

The converged position FP of the processing light EL affects the build amount. Specifically, when the converged position FP changes, a distance D3 (specifically, a distance along the Z-axis, see FIG. 28) between the build surface MS and the converged position FP changes. Note that the distance D3 between the build surface MS and the converged position FP is referred to as a "defocus amount D3" in the below-described description. When the defocus amount D3 changes, a fluence (for example, an energy amount per unit area) of the processing light EL on the build surface MS changes. Specifically, a size of a spot formed by the processing light EL on the build surface MS is larger as the defocus amount D3 is larger, and thus, the fluence of the processing light EL on the build surface MS is lower. On the other hand, the size of the spot formed by the processing light EL on the build surface MS is smaller as the defocus amount D3 is smaller, and thus, the fluence of the processing light EL on the build surface MS is higher. The amount of the build materials M molten in the melt pool MP is larger as the fluence of the processing light EL on the build surface MS is higher. The amount of the build materials M solidified on the build surface MS is larger as the amount of the build materials M molten in the melt pool MP is larger. As a result, the height (namely, the size along the Z-axis direction and the build amount) of the build object including the solidified build materials M is higher. Thus, as illustrated in FIG. 29, the defocus amount D3 and the build amount have a relationship in that the build amount is smaller as the defocus amount D3 is larger. Namely, the defocus amount D3 and the build amount have a relationship in that the build amount is larger as the defocus amount D3 is smaller.

The processing system SYSg controls the build amount of the build object by performing the converged position control operation by using the relationship between the converged position FP (specifically, the defocus amount D3 determined based on the converged position FP) and the build amount under the control of the control apparatus 8. Namely, the processing system SYSf controls the build amount of the build object by controlling the focus adjustment element 2111g to change the converged position FP based on the measured result by the measurement apparatus 7. More specifically, the processing system SYSf controls the build amount of the build object by controlling the focus adjustment element 2111g to change a relative positional relationship between the build surface MS and the converged position FP based on the measured result by the measurement apparatus 7. In other words, the processing system SYSf controls the build amount of the build object by controlling the focus adjustment element 2111g to change the defocus amount D3 that corresponds to a distance between the build surface MS and the converged position FP based on the measured result by the measurement apparatus 7.

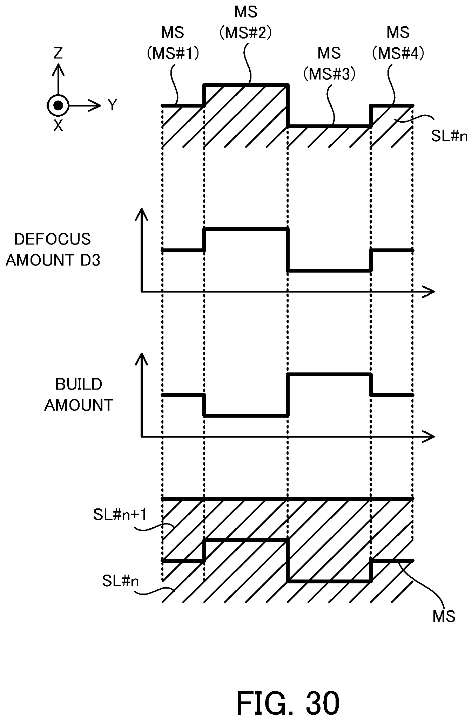

As one example, the supplied amount control operation performed when new structural layer SL having a flat surface is formed on the concave and / or convex build surface MS will be described. For example, a first uppermost part in FIG. 30 (a most upper diagram) illustrates the build surface MS including the build surfaces MS#1 to MS#4 illustrated in FIG. 12. In this case, in order to make the surface of the newly formed structural layer SL#n+1 be flat, the processing system SYSg may perform the converged position control operation so that the height of the build object formed on the build surface MS#2 is lower than the height of the build object formed on the build surfaces MS#1 and MS#4 and the height of the build object formed on the build surface MS#3 is higher than the height of the build object formed on the build surfaces MS#1 and MS#4. Namely, the processing system SYSg may perform the converged position control operation so that the build amount on the build surface MS#2 is smaller than the build amount on the build surfaces MS#1 and MS#4 and the build amount on the build surface MS#3 is larger than the build amount on the build surfaces MS#1 and MS#4.

Specifically, as illustrated in a second uppermost part FIG. 30, the processing system SYSg may control the converged position FP so that the converged position FP in the period during which the build object is formed on the build surface MS#2 is larger than the defocus amount D3 in the period during which the build object is formed on the build surfaces MS#1 and MS#4. As a result, as illustrated in a third uppermost part in FIG. 30, the build amount on the build surface MS#2 is smaller than the build amount on the build surfaces MS#1 and MS#4. On the other hand, as illustrated in the second uppermost part FIG. 30, the processing system SYSg may control the converged position FP so that the converged position FP in the period during which the build object is formed on the build surface MS#3 is smaller than the converged position FP in the period during which the build object is formed on the build surfaces MS#1 and MS#4. As a result, as illustrated in the third uppermost part in FIG. 30, the build amount on the build surface MS#3 is larger than the build amount on the build surfaces MS#1 and MS#4. Thus, as illustrated in a fifth uppermost part in FIG. 30, the surface (especially, the upper surface) of the structural layer SL#n+1 that has been newly formed on the concave and / or convex build surface MS is the flat surface by performing the converged position control operation based on the information related to the position (the height) of the build surface MS indicated by the measured result by the measurement apparatus 7.

In this manner, the processing system SYSg in the seventh example embodiment is capable of controlling the build amount (as a result, the height of the structural layer SL) by performing the converged position control operation. Thus, the processing system SYSg is capable of properly forming the three-dimensional structural object ST having desired shape and size, as with the above-described processing system SYSa.

Especially, the processing system SYSg is capable of controlling the build amount (as a result, the height of the structural layer SL) by controlling the converged position FP independently from the irradiation optical system 211 that moves based on the recipe information. Thus, the processing system SYSg is capable of performing the build operation without changing the recipe information even when the converged position control operation is performed in at least a part of the period during which the build operation is performed. Thus, the processing system SYSg is capable of controlling the build amount (as a result, the height of the structural layer SL) by performing the converged position control operation without affecting the build operation, as with the above-described processing system SYSa.

Note that at least one of the processing system SYSb in the second example embodiment to the processing system SYSf in the sixth example embodiment described above may include a feature that is unique to the processing system SYSg in the seventh example embodiment. The feature that is unique to the processing system SYSg in the seventh example embodiment may include a feature related to the converged position control operation, for example.

Moreover, in the above-described description, the processing system SYSg changes the relative positional relationship between the build surface MS and the converged position FP of the processing light EL by controlling the focus adjustment element 2111g. However, the processing system SYSg may change the relative positional relationship between the build surface MS and the converged position FP of the processing light EL by moving at least one of the processing head 21 and the stage 31, in addition to or instead of controlling the focus adjustment element 2111g.

### (8) Processing System SYS in Eighth Example Embodiment

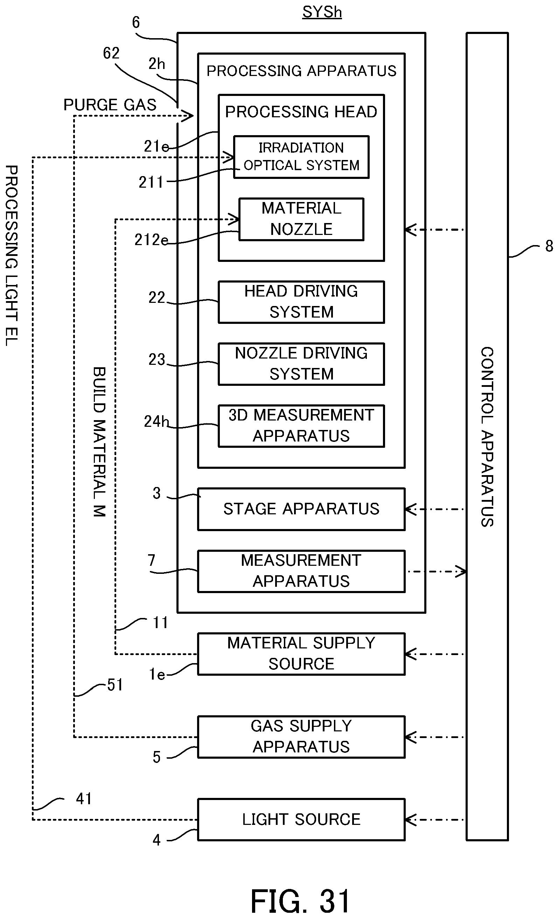

Next, with reference to FIG. 31, a processing system SYS in an eighth example embodiment (in the below-described description, it is referred to as a "processing system SYSh") will be described. FIG. 31 is a system configuration diagram that illustrates a system configuration of the processing system SYSh in the eighth example embodiment.

As illustrated in FIG. 31, the processing system SYSh in the eighth example embodiment is different from the above-described processing system SYSa in the first example embodiment in that it includes a processing apparatus 2h instead of the processing apparatus 2. Other feature of the processing system SYSh may be the same as other feature of the processing system SYSa. The processing apparatus 2h is different from the processing apparatus 2 in that it includes a three-dimensional measurement apparatus 24h. Other feature of the processing apparatus 2h may be the same as other feature of the processing apparatus 2. Note that the three-dimensional measurement apparatus 24h may be attached to the wall member 61 defining the chamber space 63IN. The three-dimensional measurement apparatus 24h may be attached to a structural object, which is different from the wall member 61, in the chamber space 63IN.

The three-dimensional measurement apparatus 24h is a measurement apparatus that is configured to measure a three-dimensional shape of a measurement target object. The measurement target object may include the workpiece W that is the target object on which the additive processing is performed, for example. A measured result by the three-dimensional measurement apparatus 24h is outputted to the control apparatus 8. In the eighth example embodiment, the control apparatus 8 may generate, based on the measured result by the three-dimensional measurement apparatus 24h, the above-described recipe information indicating the detail of the operation of the processing system SYSa for forming the three-dimensional structural object ST. Then, the processing system SYSh may perform the additive processing on the workpiece W based on the recipe information generated based on the measured result by the three-dimensional measurement apparatus 24h.

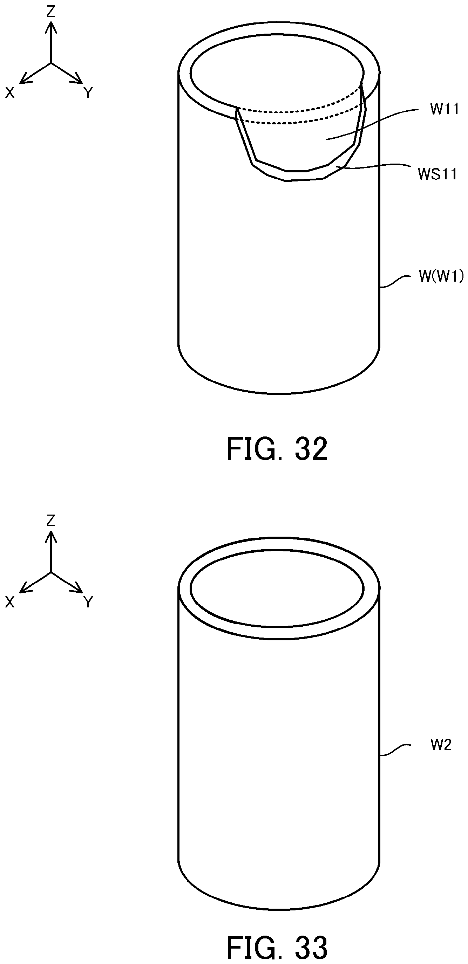

A situation where an original object W2 in which a lost part W11 is repaired (namely, restored) is generated by forming (specifically, adding) the three-dimensional structural object ST corresponding to a part that is lost by loss, damage or abrasion (in the below-described description, it is referred to as a "lost part W11") on the workpiece W corresponding to an object W1 a part of which is lost by the loss, the damage or the abrasion is one example of a situation where the recipe information is generated by using the measured result by the three-dimensional measurement apparatus 24h. Next, with reference to FIG. 32 to FIG. 35, a flow of an operation for forming the original object W2 by forming the three-dimensional structural object ST corresponding to the lost part W11 on the workpiece W corresponding to the object W1 in which the lost part W11 is lost will be described. However, the processing system SYSh may generate the recipe information by using the measured result by the three-dimensional measurement apparatus 24h even in a situation where any object W2' that has a three-dimensional shape different from that of an object W1' by forming (specifically, adding) the three-dimensional structural object ST on the workpiece W corresponding to any object W1'. Thus, in the below-described description, the terms "object W1" and "object W2" may be replaced by the terms "object W1‴ and "object W2'".

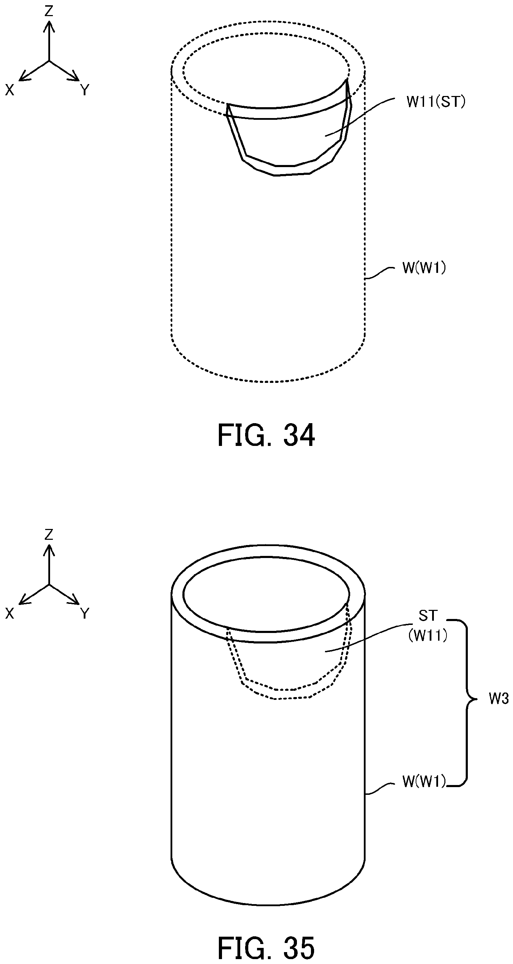

FIG. 32 is a perspective view that illustrates the workpiece W corresponding to the object W1 in which the lost part W11 is lost (a pipe in an example illustrated in FIG. 32). The control apparatus 8 determines a three-dimensional shape of the object W1 from the measured result by the three-dimensional measurement apparatus 24h that has measured the three-dimensional shape of the workpiece W. On the other hand, FIG. 33 is a perspective view that illustrates the original object W2 (a pipe in an example illustrated in FIG. 33). The control apparatus 8 determines a three-dimensional shape of the original object W2 from three-dimensional model data indicating the three-dimensional shape of the original object W2. The control apparatus 8 calculates a three-dimensional shape of the three-dimensional structural object ST that should be formed by the additive processing (namely, a three-dimensional shape of the lost part W11) based on the measured result of the object W1 by the three-dimensional measurement apparatus 24h and the three-dimensional model data indicating the three-dimensional shape of the original object W2. Specifically, the control apparatus 8 calculates the three-dimensional shape of the three-dimensional structural object ST that should be formed by the additive processing (namely, the three-dimensional shape of the lost part W11) by calculating a difference between the three-dimensional shape of the object W1 indicated by the measured result by the three-dimensional measurement apparatus 24h and the three-dimensional shape of the original object W2 indicated by the three-dimensional model data. FIG. 34 illustrates the three-dimensional shape of the three-dimensional structural object ST that should be formed by the additive processing (namely, the three-dimensional shape of the lost part W11), which has been calculated by calculating the difference between the three-dimensional shape of the object W1 illustrated in FIG. 32 and the three-dimensional shape of the original object W2 illustrated in FIG. 33.

Then, the control apparatus 8 generates the recipe information based on the three-dimensional shape of the three-dimensional structural object ST that should be formed by the additive processing. Specifically, the control apparatus 8 generates slice data by performing the slicing process on the three-dimensional model data indicating the three-dimensional shape of the three-dimensional structural object ST that should be formed by the additive processing by the layer pitch. Then, the control apparatus 8 generates the recipe information indicating the detail of the operation of the processing system SYSa for forming the three-dimensional structural object ST based on the slice data. Note that a detailed description of the recipe information is omitted because it is already described in the first example embodiment.

Then, the control apparatus 8 controls the processing system SYSh to perform the additive processing based on the generated recipe information. As a result, as illustrated in FIG. 35, an object W3 in which the lost part W11 is complemented with the three-dimensional structural object ST that has been newly formed by the additive processing is generated. Namely, the object W3 in which the object W1 in which the lost part W11 is lost and the newly formed three-dimensional structural object ST are integrated is formed.

When an ideal additive processing based on the recipe information is performed, the object W3 is an object having a three-dimensional shape that is the same as that of the original object W2. Thus, generating the object W3 may be regarded to be equivalent to re-generating the original object W2. Namely, generating the object W3 may be regarded to be equivalent to re-generating the original object W2 by repairing the object, a part of which is lost, damaged or abrased.

On the other hand, there is a possibility that the ideal additive processing based on the recipe information is not performed. In this case, there is a possibility that the object W3 is an object having a three-dimensional shape that is different from that of the original object W2. Thus, the processing system SYSh may measure the three-dimensional shape of the object W3 by using the three-dimensional measurement apparatus 24h to determine whether the object W3 has the same three-dimensional shape as the original object W2. In this case, the object W3 that has been formed on the stage 31 by the additive processing may be placed on the stage 31 as it is because the processing apparatus 2h itself includes the three-dimensional measurement apparatus 24h. Namely, the object W3 may not be moved from the stage 31. Then, the control apparatus 8 may determine based on the measured result of the object W3 by the three-dimensional measurement apparatus 24h and the three-dimensional model data indicating the three-dimensional shape of the original object W2 whether or not the object W3 has the three-dimensional shape that is the same as that of the original object W2. Specifically, the control apparatus 8 may determine that the object W3 has the three-dimensional shape that is the same as that of the original object W2 when a difference between the three-dimensional shape of the object W3 indicated by the measured result by the three-dimensional measurement apparatus 24h and the three-dimensional shape of the original object W2 indicated by the three-dimensional shape of the original object W2 is smaller than an allowable threshold value. The control apparatus 8 may determine that the object W3 has the three-dimensional shape that is different from that of the original object W2 when the difference between the three-dimensional shape of the object W3 indicated by the measured result by the three-dimensional measurement apparatus 24h and the three-dimensional shape of the original object W2 indicated by the three-dimensional shape of the original object W2 is larger than the allowable threshold value.

When it is determined that the object W3 has the three-dimensional shape that is different from that of the original object W2, the processing system SYSh may perform a processing to make the three-dimensional shape of the object W3 same as the three-dimensional shape of the original object W2.

For example, when the build amount by the additive processing performed to form the object W3 is smaller than an ideal amount (namely, the three-dimensional structural object ST formed by the additive processing is smaller than the lost part W11), the processing system SYSh may make the three-dimensional shape of the object W3 same as the three-dimensional shape of the original object W2 by performing an additional additive processing on at least a part of the object W3. In this case, the control apparatus 8 may calculate the three-dimensional shape of the three-dimensional structural object ST that should be formed by the additive processing (namely, the three-dimensional shape of the three-dimensional structural object ST that should be newly formed in order to make the three-dimensional shape of the object W3 same as the three-dimensional shape of the original object W2) by calculating the difference between the three-dimensional shape of the object W3 indicated by the measured result by the three-dimensional measurement apparatus 24h and the three-dimensional shape of the original object W2 indicated by the three-dimensional model data. Then, the control apparatus 8 may generate the recipe information based on the calculated three-dimensional shape of the three-dimensional structural object ST and may control the processing system SYSh to perform the additive processing based on the generated recipe information.

For example, when the build amount by the additive processing performed to form the object W3 is larger than the ideal amount (namely, the three-dimensional structural object ST formed by the additive processing is larger than the lost part W11), the processing system SYSh may make the three-dimensional shape of the object W3 same as the three-dimensional shape of the original object W2 by performing a removal processing for removing at least a part of the object W3. In this case, the control apparatus 8 may calculate a three-dimensional shape of a removal processing part that should be removed by the removal processing (namely, a three-dimensional shape of a part that should be removed in order to make the three-dimensional shape of the object W3 same as the three-dimensional shape of the original object W2) by calculating the difference between the three-dimensional shape of the object W3 indicated by the measured result by the three-dimensional measurement apparatus 24h and the three-dimensional shape of the original object W2 indicated by the three-dimensional model data. Then, the control apparatus 8 may generate the recipe information for removing the calculated removal processing part and may control the processing system SYSh to perform the removal processing based on the generated recipe information. Note that the processing system SYSh may perform the removal processing on the object W3 by irradiating the object W3 from the irradiation optical system 211 with the processing light EL having an intensity that allows the object W3 to be molten or sublimated.

After forming the object W3, the processing system SYSh may perform a finish processing on the object W3. The finish processing may include smoothing processing for smoothing a smoothing target surface that is at least a part of a surface of the object W3, for example. Note that "the smoothing processing for smoothing the smoothing target surface" in the eighth example embodiment may be a processing for making the surface of the smoothing target surface smoother, increasing a flatness of the smoothing target surface (namely, making it flatter), and / or decreasing (namely, reducing) roughness of the smoothing target surface, compared to a case where the smoothing processing is not yet performed. As one example, the processing system SYSh may perform, as the smoothing processing, the removal processing for removing a concavity and / or convexity by irradiating the undesired concavity and / or convexity generated on the surface of the object W3 with the processing light EL. As another example, the processing system SYSh may perform, as the smoothing processing, a remelt processing for smoothing the surface by melting the build material M constituting the concavity and / or convexity by irradiating the undesired concavity and / or convexity generated on the surface of the object W3 with the processing light EL, making a surface of the molten build material M be close to the flat surface by using a self-weight and / or a surface tension of the molten build material M, and cooling and solidifying the molten build material M. Alternatively, the finish processing may include a color control processing for irradiating the surface of the object W3 with the processing light EL to control a color of the surface (for example, change the color of the surface of the object W3 to a desired color), in addition to or instead of the above-described smoothing processing.

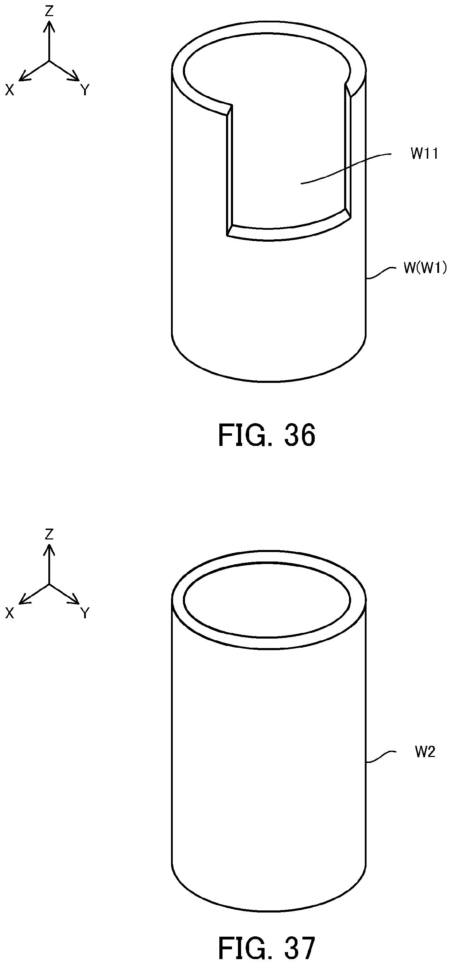

There is a possibility that it is not easy to form the three-dimensional structural object ST corresponding to the lost part W11 by the additive processing depending on the three-dimensional shape of the lost part W11. Thus, before the three-dimensional structural object ST corresponding to the lost part W11 is formed by the additive processing, the processing system SYSh may perform processing for changing the three-dimensional shape of the lost part W11 to a desired three-dimensional shape that allows the three-dimensional structural object ST corresponding to the lost part W11 to be properly formed. Specifically, the processing system SYSh may change the three-dimensional shape of the object W1 by performing the above-described removal processing on an exposed surface WS11 (namely, a part that was connected to the lost part W11, see FIG. 32) of the object W1 that has been exposed outside by the loss of the lost part W11 to thereby change the three-dimensional shape of the lost part W11. For example, the processing system SYSh may change the three-dimensional shape of the object W1 from a three-dimensional shape illustrated in FIG. 32 to a three-dimensional shape illustrated in FIG. 36 by performing the removal processing on the exposed surface WS11 of the object W1 illustrated in FIG. 32. In an example illustrated in FIG. 32 and FIG. 36, the processing system SYSh changes the three-dimensional shape of the lost part W11 from a relatively complicated three-dimensional shape to a relatively simple three-dimensional shape by changing the three-dimensional shape of the object W1.

There is a possibility that it is not easy to perform the additive processing on the exposed surface WS11 depending on a state of the exposed surface WS11 of the object W1. Thus, before the three-dimensional structural object ST corresponding to the lost part W11 is formed by the additive processing, the processing system SYSh may perform processing for changing the state of the exposed surface WS11. For example, the processing system SYSh may change the state of the exposed surface WS11 by performing the above-described removal processing on the exposed surface WS11. For example, the processing system SYSh may change the state of the exposed surface WS11 by performing the above-described smoothing processing on the exposed surface WS11.

The processing system SYSh in the eighth example embodiment is capable of forming the object having the ideal three-dimensional shape by using the measured result by the measurement apparatus 7, while achieving an effect that is the same as the effect achievable by the above-described processing system SYSa in the first example embodiment.

Note that the processing system SYSh in the eighth example embodiment may not perform the nozzle movement operation. In this case, the processing system SYSh may not include the nozzle driving system 23.

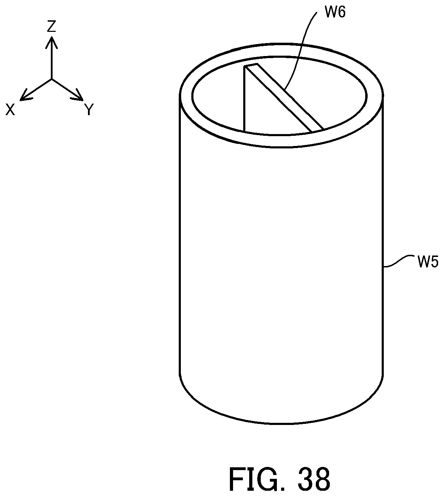

In the above-described description, the processing system SYSh sets the shape of the original object W2 to be the ideal three-dimensional shape for the workpiece W corresponding to the object W1 a part of which is lost by the loss, the damage or the abrasion, and form the object having the ideal three-dimensional shape. However, the processing system SYSh may form the object having the shape different from that of the original object as the ideal three-dimensional shape in order to improve a performance of the object. For example, the processing system SYSh may form the object having the shape different from that of the original object, may add a desired shape to a shape that is substantially the same as that of the original object. FIG. 38 is a diagram that illustrates an object W5 having a fin W6 for adjusting a flow of fluid flowing through a pipe that is the workpiece W. As illustrated in FIG. 38, a structure (the fin W6 in an example illustrated in FIG. 38) for achieving a new effect of adjusting the flow may be added by the additive processing.

Moreover, in the above-described description, the processing system SYSh performs at least one of the finish processing, the removal processing and the smoothing processing by using the processing light EL for performing the additive processing. However, the processing system SYSh may perform at least one of the finish processing, the removal processing and the smoothing processing by using a processing light that is different from the processing light EL for performing the additive processing. In this case, the processing system SYSh may include an irradiation optical system that emits the processing light for performing at least one of the finish processing, the removal processing and the smoothing processing. Alternatively, the processing system SYSh may perform at least one of the finish processing, the removal processing and the smoothing processing by using a tool. Namely, the processing system SYSh may perform a machine processing as at least one of the finish processing, the removal processing and the smoothing processing.

Moreover, at least one of the processing system SYSb in the second example embodiment to the processing system SYSg in the seventh example embodiment may include a feature unique to the processing system SYSh in the eighth example embodiment. The feature unique to the processing system SYSh in the eighth example embodiment may include a feature related to the three-dimensional measurement apparatus 24h, for example.

### (9) Modified Example

The nozzle driving system 23 may stop the movement of the material nozzle 212 under the control of the control apparatus 8 when there is a possibility that the material nozzle 212 contacts with the workpiece W due to the above-described nozzle movement operation. As a result, it is possible to prevent the material nozzle 212 from contacting the workpiece W.

In the above-described description, the processing system SYS melts the build materials M by irradiating the build materials M with the processing light EL. However, the processing system SYS may melt the build materials M by irradiating the build materials M with any energy beam. In this case, the processing system SYS may include a beam irradiation apparatus that is configured to emit any energy beam in addition to or instead of the irradiation optical system 211. At least one of a charged particle beam, an electromagnetic wave and the like is one example of any energy beam. A least one of an electron beam, an ion beam and the like is one example of the charged particle beam.

In the above-described description, the processing system SYS performs the additive processing based on the Laser Metal Deposition. However, the processing system SYS may form the three-dimensional structural object ST from the build materials M based on other method for forming the three-dimensional structural object ST by irradiating the build materials M with the processing light EL (alternatively, any energy beam). Alternatively, the processing system SYS may form the three-dimensional structural object ST based on any method for the additive processing that is different from the method of irradiating the build materials M with the processing light EL (alternatively, any energy beam).

### (10) Supplementary Note

Regarding the above-described embodiment, below-described supplementary notes are further disclosed.

### [Supplementary Note 1]

The processing method including:
irradiating an obj ect with an energy beam;
supplying a build material irradiated with the energy beam from a material supply member;
obtaining information related to a height of a surface of the object; and
changing a distance between the material supply member and the surface of the object based on the information related to the height of a surface of the object.

### [Supplementary Note 2]

The processing method including:
irradiating an obj ect with an energy beam;
supplying a build material irradiated with the energy beam from a material supply member;
obtaining information related to a height of a surface of the object; and
changing a direction of the material supply member based on the information related to the height of a surface of the object.

### [Supplementary Note 3]

The processing method including:
irradiating an obj ect with an energy beam;
supplying a build material irradiated with the energy beam;
obtaining information related to a height of a surface of the object; and
a material supply control apparatus that changes a supplied amount of the build material based on the information related to the height of a surface of the object.

### [Supplementary Note 4]

The processing method including:
irradiating an obj ect with an energy beam;
supplying a build material irradiated with the energy beam from a material supply member;
obtaining information related to a position of a surface of the object; and
controlling the material supply member based on the information related to the position of a surface of the object.

### [Supplementary Note 5]

The processing method including:
irradiating an obj ect with an energy beam;
supplying a build material irradiated with the energy beam from a material supply member; and
changing a distance between the material supply member and a surface of the object to increase it when a height of the surface of the object is lower than a desired height.

### [Supplementary Note 6]

The processing method including:
irradiating an obj ect with an energy beam;
supplying a build material irradiated with the energy beam from a material supply member; and
changing a distance between a surface of the object and a concentration area of the build material supplied by the material supply member to increase it when a height of the surface of the object is lower than a desired height.

### [Supplementary Note 7]

The processing method including:
irradiating an obj ect with an energy beam;
supplying a build material irradiated with the energy beam; and
perform a control so that a concentration area of the build material when a height of a surface of the object is lower than a desired height is located above a concentration area of the build material when the height of the surface of the object is higher than the desired height.

### [Supplementary Note 8]

The processing method including:
irradiating an obj ect with an energy beam;
supplying a build material irradiated with the energy beam;
obtaining information related to a position of a surface of the object; and
changing a converged position of the energy beam based on the information related to the position of a surface of the object.

At least a part of the features of each embodiment described above may be properly combined with at least another part of the features of each embodiment described above. A part of the features of each embodiment described above may not be used. Moreover, the disclosures of all publications and United States patents that are cited in each embodiment described above are incorporated in the disclosures of the present application by reference if it is legally permitted.

The present invention is allowed to be changed, if desired, without departing from the essence or spirit of the invention which can be read from the claims and the entire specification, and a processing system, which involves such changes, is also intended to be within the technical scope of the present invention.

### Description of Reference Codes

- SYS: processing system
- 1: material supply source
- 2: processing apparatus
- 21: processing head
- 211: irradiation optical system
- 212: material nozzle
- 22: head driving system
- 23: nozzle driving system
- 3: stage apparatus
- 31: stage
- 7: measurement apparatus
- 8: control apparatus
- W: workpiece
- M: build material
- SL: structural layer
- MS: build surface
- MP: melt pool
- EL: processing light

## Claims

1. A processing system comprising:
an irradiation system that irradiates an object with an energy beam;
a material supply member that supplies a build material irradiated with the energy beam;
a measurement apparatus that obtains information related to a height of a surface of the object; and
a distance change apparatus that changes a distance between the material supply member and the surface based on a measured result by the measurement apparatus,
the distance change apparatus being configured to change the distance between the material supply member and the surface to increase it when the height of the surface is lower than a desired height and to change the distance between the material supply member and the surface to decrease it when the height of the surface is higher than the desired height.

2. The processing system according to claim 1, wherein
the information related to the height of the surface of the object includes at least one of an information indicating the height of the object and an information indicating an ideal height of the obj ect.

3. The processing system according to claim 1 or 2, wherein
the information related to the height of the surface of the object includes an information related to a difference between the height of the object and an ideal height of the obj ect.

4. A processing system comprising:
an irradiation system that irradiates an object with an energy beam;
a material supply member that supplies a build material irradiated with the energy beam;
a measurement apparatus that obtains information related to a height of a surface of the object; and
a distance change apparatus that changes a distance between the material supply member and the surface based on a measured result by the measurement apparatus.

5. The processing system according to claim 4, wherein
the information related to the height of the surface of the object includes at least one of an information indicating the height of the object and an information indicating an ideal height of the obj ect.

6. The processing system according to claim 4 or 5, wherein
the information related to the height of the surface of the object includes an information related to a difference between the height of the object and an ideal height of the obj ect.

7. The processing system according to any one of claims 1 to 6 further comprising a movement apparatus that moves the irradiation system along a first movement direction,
the measurement apparatus obtains the information related to the height of the surface at a front side along the first movement direction.

8. The processing system according to any one of claims 1 to 7 further comprising:
an obtaining unit that obtains an irradiation system control information for controlling the irradiation system before the object is processed; and
a control unit that control the irradiation system based on the irradiation system control information obtained by the obtaining unit,
the processing system controlling a build amount by means of the distance change apparatus changing the distance between the material supply member and the surface without changing the irradiation system control information after a processing of the object is started.

9. The processing system according to any one of claims 1 to 8, wherein
the distance change apparatus controls the material supply member to move the material supply member.

10. The processing system according to claim 9, wherein
the material supply member supplies the build material from a plurality of material supply ports directed toward different directions,
the processing system changes a concentration area of the build material supplied from the plurality of material supply ports by means of the distance change apparatus moving the material supply member.

11. The processing system according to claim 9 or 10, wherein
the material supply member supplies the build material from a plurality of material supply ports directed toward different directions,
the processing system changes a distance between the object and a concentration area of the build material supplied from the plurality of material supply ports by means of the distance change apparatus moving the material supply member.

12. The processing system according to any one of claims 9 to 11, wherein
the material supply member includes:
a first material supply member having a first material supply port directed toward a first direction; and
a second material supply member having a second material supply port directed toward a second direction that is different from the first direction,
the processing system changes a concentration area of the build material supplied from the first and second material supply ports by means of the distance change apparatus moving either one of the first and second material supply members.

13. The processing system according to any one of claims 9 to 12, wherein
the material supply member includes:
a first material supply member having a first material supply port directed toward a first direction; and
a second material supply member having a second material supply port directed toward a second direction that is different from the first direction,
the processing system changes a concentration area of the build material supplied from the first and second material supply ports by means of the distance change apparatus moving the first and second material supply members by different moving distances.

14. The processing system according to any one of claims 1 to 13 further comprising an output apparatus that outputs information related to a position at which an additive processing is performed on the object by irradiating the build material with the energy beam,
the output apparatus outputting the information related to the position of the object at which the additive processing is performed based on a fluctuation of the distance between the material supply member and the surface when the additive processing is performed.

15. The processing system according to claim 14, wherein
the output apparatus includes a display apparatus.

16. A processing system comprising:
an irradiation system that irradiates an object with an energy beam;
a material supply member that supplies a build material irradiated with the energy beam;
a measurement apparatus that obtains information related to a height of a surface of the object; and
a direction change apparatus that changes a direction of the material supply member based on a measured result by the measurement apparatus.

17. The processing system according to claim 16, wherein
the material supply member supplies the build material from a plurality of material supply ports directed toward different directions,
the processing system changes a concentration area of the build material supplied from the plurality of material supply ports by means of the direction change apparatus changing the direction of the material supply member.

18. The processing system according to claim 16 or 17, wherein
the material supply member supplies the build material from a plurality of material supply ports directed toward different directions,
the processing system changes a distance between the object and a concentration area of the build material supplied from the plurality of material supply ports by means of the direction change apparatus changing the direction of the material supply member.

19. The processing system according to any one of claims 16 to 18, wherein
the material supply member includes:
a first material supply member having a first material supply port directed toward a first direction; and
a second material supply member having a second material supply port directed toward a second direction that is different from the first direction,
the processing system changes a concentration area of the build material supplied from the first and second material supply ports by means of the direction change apparatus changing the direction of either one of the first and second material supply members.

20. The processing system according to any one of claims 9 to 13, wherein
the material supply member includes:
a first material supply member having a first material supply port directed toward a first direction; and
a second material supply member having a second material supply port directed toward a second direction that is different from the first direction,
the processing system changes a concentration area of the build material supplied from the first and second material supply ports by means of the direction change apparatus changing changed amount of directions of the first and second material supply members so that they are different from each other.

21. A processing system comprising:
an irradiation system that irradiates an object with an energy beam;
a material supply member that supplies a build material irradiated with the energy beam;
a measurement apparatus that obtains information related to a height of a surface of the object; and
a material supply control apparatus that changes a supplied amount of the build object based on a measured result by the measurement apparatus.

22. The processing system according to claim 21, wherein
the material supply member includes:
a first material supply member having a first material supply port directed toward a first direction; and
a second material supply member having a second material supply port directed toward a second direction that is different from the first direction,
the material supply control apparatus changes the supplied amount of either one of the first and second material supply members.

23. The processing system according to claim 21 or 22, wherein
the material supply member includes:
a first material supply member having a first material supply port directed toward a first direction; and
a second material supply member having a second material supply port directed toward a second direction that is different from the first direction,
the material supply control apparatus changes the supplied amounts of the first and second material supply members so that they are different from each other.

24. A processing system comprising:
an irradiation system that irradiates an object with an energy beam;
a material supply member that supplies a build material irradiated with the energy beam;
a measurement apparatus that obtains information related to a height of a surface of the object; and
a material supply control apparatus that controls the material supply member based on a measured result by the measurement apparatus.

25. A processing system comprising:
an irradiation system that irradiates an object with an energy beam;
a material supply member that supplies a build material irradiated with the energy beam; and
a distance change apparatus that changes a distance between the material supply member and a surface of the object to increase it when a height of the surface is lower than a desired height.

26. The processing system according to claim 25, wherein
the material supply member includes:
a first material supply member having a first material supply port directed toward a first direction; and
a second material supply member having a second material supply port directed toward a second direction that is different from the first direction,
the processing system changes a concentration area of the build material supplied from the first and second material supply ports by means of the distance change apparatus moving either one of the first and second material supply members.

27. The processing system according to claim 25 or 26, wherein
the material supply member includes:
a first material supply member having a first material supply port directed toward a first direction; and
a second material supply member having a second material supply port directed toward a second direction that is different from the first direction,
the processing system changes a concentration area of the build material supplied from the first and second material supply ports by means of the distance change apparatus moving the first and second material supply members by different moving distances.

28. A processing system comprising:
an irradiation system that irradiates an object with an energy beam;
a material supply member that supplies a build material irradiated with the energy beam; and
a concentration area change apparatus that changes a distance between a surface of the object and a concentration area of the build material supplied by the material supply member to decrease it when a height of the surface of the object is lower than a desired height.

29. A processing system comprising:
an irradiation system that irradiates an object with an energy beam;
a material supply member that supplies a build material irradiated with the energy beam; and
a control apparatus that performs a control so that a concentration area of the build material when a height of a surface of the object is lower than a desired height is located above a concentration area of the build material when the height of the surface is higher than the desired height.

30. A processing system comprising:
an irradiation system that irradiates an object with an energy beam;
a material supply member that supplies a build material irradiated with the energy beam;
a measurement apparatus that obtains information related to a position of a surface of the object; and
a control apparatus that changes a converged position of the energy beam by controlling the irradiation system based on a measured result by the measurement apparatus.

31. The processing system according to claim 30, wherein
the control apparatus changes the converged position of the energy beam so that a distance between a first surface and the converged position of the energy beam with which the first surface is irradiated is different from a distance between a second surface and the converged position of the energy beam with which the second surface is irradiated

32. The processing system according to claim 31, wherein
the second surface is located above the first surface,
the control apparatus changes the converged position of the energy beam so that the distance between the first surface and the converged position of the energy beam with which the first surface is irradiated is shorter than the distance between the second surface and the converged position of the energy beam with which the second surface is irradiated

33. A processing system comprising:
an irradiation system that irradiates an object with an energy beam;
a material supply member that supplies a build material irradiated with the energy beam; and
a measurement apparatus that obtains information related to a height of a surface of the obj ect,
a relative position between a terminal optical element of the irradiation system and the material supply member being changeable.

34. The processing system according to claim 33, wherein
the information related to the height of the surface of the object includes at least one of an information indicating the height of the object and an information indicating a relationship between the height of the object and an ideal height of the object.

35. The processing system according to claim 33 or 34, wherein
the information related to the height of the surface of the object includes an information related to a difference between the height of the object and an ideal height of the obj ect.

36. The processing system according to any one of claims 33 to 35 changing the relative position between the terminal optical element of the irradiation system and the material supply member based on the information obtained by the measurement apparatus.

37. The processing system according to any one of claims 33 to 36, wherein
the measurement apparatus optically receives a light from the object in order to obtain the information related to the height of the surface of the object,
a relative position between the material supply member and an optical element that optically receives the light from the object changes due to a change of the relative position between the terminal optical element and the material supply member.

38. A processing system comprising:
an irradiation system that irradiates an object with an energy beam;
a material supply member that supplies a build material irradiated with the energy beam; and
a measurement apparatus that obtains information related to a height of a surface of the obj ect,
a relative position between the measurement apparatus and the material supply member is changeable.

39. The processing system according to claim 38, wherein
the information related to the height of the surface of the object includes at least one of an information indicating the height of the object and an information indicating a relationship between the height of the object and an ideal height of the object.

40. The processing system according to claim 38 or 39, wherein
the information related to the height of the surface of the object includes an information related to a difference between the height of the object and an ideal height of the obj ect.

41. The processing system according to any one of claims 38 to 40, wherein
the measurement apparatus is disposed at a position that is fixed relative to a terminal optical element of the irradiation system.

42. The processing system according to any one of claims 38 to 42, wherein
the measurement apparatus includes at least one of an irradiation apparatus that irradiates the object with a light and an optical element that optically receives a light from the obj ect,
a position of the material supply member is changeable relative to at least one of the irradiation apparatus and the optical element.

43. A processing system comprising:
an irradiation system that irradiates an object with an energy beam;
a material supply member that supplies a build material irradiated with the energy beam; and
a measurement apparatus that obtains information related to a height of a surface of the obj ect,
a relative directional relationship between a terminal optical element of the irradiation system and the material supply member being changeable.

44. The processing system according to claim 43, wherein
the information related to the height of the surface of the object includes at least one of an information indicating the height of the object and an information indicating a relationship between the height of the object and an ideal height of the object.

45. The processing system according to claim 43 or 44, wherein
the information related to the height of the surface of the object includes an information related to a difference between the height of the object and an ideal height of the obj ect.

46. A processing system comprising:
an irradiation system that irradiates an object with an energy beam;
a material supply member that supplies a build material irradiated with the energy beam; and
a measurement light irradiation apparatus that emits a measurement light for obtaining information related to a height of a surface of the object,
a relative directional relationship between the measurement light irradiation apparatus and the material supply member being changeable.

47. The processing system according to claim 46, wherein
the information related to the height of the surface of the object includes at least one of an information indicating the height of the object and an information indicating a relationship between the height of the object and an ideal height of the object.

48. The processing system according to claim 46 or 47, wherein
the information related to the height of the surface of the object includes an information related to a difference between the height of the object and an ideal height of the obj ect.

49. The processing system according to any one of claims 46 to 48, wherein
the measurement light irradiation apparatus is disposed at a position that is fixed relative to a terminal optical element of the irradiation system.
